# EUROPEAN PATENT SPECIFICATION

(11) **EP 2 920 971 B1**
(45) Date of publication and mention of the grant of the patent: **01.07.2020**
(21) Application number: 13786369.2
(22) Date of filing: 21.10.2013
(51) Int. Cl.: H04N 19/70, H04N 19/107

(54) **DEVICES AND METHODS FOR PROCESSING OF NON-IDR RELATED SYNTAX FOR HIGH EFFICIENCY VIDEO CODING (HEVC)**
VORRICHTUNGEN UND VERFAHREN ZUR VERARBEITUNG EINER NICHT-IDR-SYNTAX FÜR HOCHEFFIZIENTE VIDEOCODIERUNG (HEVC)
DISPOSITIFS ET PROCÉDÉS DE TRAITEMENT D'UNE SYNTAXE NON IDR POUR CODAGE VIDÉO À HAUT RENDEMENT (HEVC)

(30) Priority: 16.11.2012 US 201261727659 P; 14.03.2013 US 201361785781 P; 16.04.2013 US 201313864198
(43) Date of publication of application: 23.09.2015
(73) Proprietor: Google Technology Holdings LLC, Mountain View, CA 94043 (US)
(72) Inventor: YU, Yue, San Diego, California 92126 (US); LOU, Jian, Cupertino, California 95014 (US); WANG, Limin, San Diego, California 92128 (US)
(74) Representative: Williams, Michael David
(86) International application number: PCT/US2013/065870
(87) International publication number: WO 2014/078013

(56) References cited:
- Benjamin Bross, Woo-Jin Han, Jens-Rainer Ohm, Gary J. Sullivan, Thomas Wiegand: "High Efficiency Video Coding (HEVC) text specification draft 9", JCT-VC , 8 November 2012 (2012-11-08), XP002721424, Retrieved from the Internet: URL:http://phenix.int-evry.fr/jct/doc_end_ user/documents/11_Shanghai/wg11/JCTVC-K100 3-v9.zip [retrieved on 2014-03-07]
- ANONYMOUS: "Text of ISO/IEC DIS 23008-2 High Efficiency Video Coding", 101. MPEG MEETING;16-7-2012 - 20-7-2012; STOCKHOLM; (MOTION PICTURE EXPERT GROUP OR ISO/IEC JTC1/SC29/WG11),, no. N12935, 3 August 2012 (2012-08-03), XP030019407,
- Benjamin Bross, Woo-Jin Han, Jens-Rainer Ohm, Gary J. Sullivan, Thomas Wiegand: "High Efficiency Video Coding (HEVC) text specification draft 9", JCT-VC , 28 November 2012 (2012-11-28), XP002721425, Retrieved from the Internet: URL:http://phenix.int-evry.fr/jct/doc_end_ user/documents/11_Shanghai/wg11/JCTVC-K100 3-v10.zip [retrieved on 2014-03-07]
- ANONYMOUS: "Study Text of ISO/IEC DIS 23008-2 High Efficiency Video Coding", 102. MPEG MEETING;15-10-2012 - 19-10-2012; SHANGHAI; (MOTION PICTURE EXPERT GROUP OR ISO/IEC JTC1/SC29/WG11),, no. N13155, 25 December 2012 (2012-12-25), XP030019623,

## Description

### FIELD

The disclosure relates generally to the field of video coding, and more specifically to systems, devices and methods for cleaning up the slice segment header syntax design.

### BACKGROUND

Video compression uses block processing for many operations. In block processing, a block of neighboring pixels is grouped into a coding unit and compression operations treat this group of pixels as one unit to take advantage of correlations among neighboring pixels within the coding unit. Block-based processing often includes prediction coding and transform coding. Transform coding with quantization is a type of data compression which is commonly "lossy" as the quantization of a transform block taken from a source picture often discards data associated with the transform block in the source picture, thereby lowering its bandwidth requirement but often also resulting in quality loss in reproducing of the original transform block from the source picture.

MPEG-4 AVC, also known as H.264, is an established video compression standard that uses transform coding in block processing. In H.264, a picture is divided into macroblocks (MBs) of 16x16 pixels. Each MB is often further divided into smaller blocks. Blocks equal in size to or smaller than a MB are predicted using intra-/inter-picture prediction, and a spatial transform along with quantization is applied to the prediction residuals. The quantized transform coefficients of the residuals are commonly encoded using entropy coding methods (e.g., variable length coding or arithmetic coding). Context Adaptive Binary Arithmetic Coding (CABAC) was introduced in H.264 to provide a substantially lossless compression efficiency by combining an adaptive binary arithmetic coding technique with a set of context models. Context model selection plays a role in CABAC in providing a degree of adaptation and redundancy reduction. H.264 specifies two kinds of scan patterns over 2D blocks. A zigzag scan is used for pictures coded with progressive video compression techniques and an alternative scan is for pictures coded with interlaced video compression techniques.

HEVC (High Efficiency Video Coding), an international video coding standard developed to succeed H.264, extends transform block sizes to 16×16 and 32×32 pixels to benefit high definition (HD) video coding. HEVC may also use a variety of scan patterns, including zigzag. In a draft document entitled 'High Efficiency Video Coding (HEVC) text specification draft 9', Benjamin Bross, Woo-Jim Han, Jens-Rainer Ohm, Gary J. Sullivan, Thomas Wiegand, JCT-VC, 8 November 2012, syntax for encoding non-IDR parameters within an encoded bitstream is described.

Within video compression standards such as HEVC, coding mechanisms for reducing spatial and temporal redundancies are desirable. Ongoing efforts are directed at increasing the efficiencies of encoders and decoders (codecs), which compress and decompress, respectively, video data streams. Because a purpose of codecs is to reduce the size of digital video frames, thereby promoting the efficient storage and communication of video, development in codec hardware and encoding/decoding processes continues.

### BRIEF SUMMARY

In accordance with aspects of the present invention, there is provided a method and an encoder, as recited in the accompanying claims.

Accordingly, there is provided herein systems and methods for processing of non-IDR related syntax for HEVC.

In a first aspect, method is disclosed comprising: evaluating, by the computing device, a single conditional statement once to determine if a current picture is a non-IDR picture; based on the evaluating of the single conditional statement, when a non-IDR flag indicates a non-IDR picture is present, performing: encoding or decoding, by the computing device, a first non-IDR parameter indicating a picture order count modulo MaxPicOrderCntLsb for the current picture; encoding or decoding, by the computing device, a second non-IDR parameter indicating how a short-term picture set of the current picture is created; encoding or decoding, by the computing device, a third non-IDR parameter indicating an index to a list of the short-term reference picture sets used for creation of a reference picture set of the current picture; encoding or decoding, by the computing device, a fourth non-IDR parameter indicating a number of candidate long-term reference pictures that are included in a long-term reference picture set of the current picture; encoding or decoding, by the computing device, a fifth non-IDR parameter indicating the number of long-term reference pictures that are included in the long-term reference picture set of the current picture; encoding or decoding, by the computing device, a sixth non-IDR parameter indicating an index into a list of candidate long-term reference pictures for identification of a picture that is included in the long-term reference picture set of the current picture; encoding or decoding, by the computing device, a seventh non-IDR parameter indicating a value of a picture order count modulo MaxPicOrderCntLsb of an i-th long-term reference picture that is included in the long-term reference picture set of the current picture; encoding or decoding, by the computing device, an eighth non-IDR parameter indicating whether the i-th long term reference picture is used for reference by the current picture; encoding or decoding, by the computing device, a ninth non-IDR parameter indicating how to calculate a picture order of the long term reference picture set of the current picture; encoding or decoding, by the computing device, a tenth non-IDR parameter indicating the value of most significant bits of a picture order count value of the i-th long-term reference picture that is included in the long-term reference picture set of the current picture; encoding or decoding, by the computing device, an eleventh non-IDR parameter indicating if temporal motion vector predictors are used in the sequence of video; encoding or decoding, by the computing device, a twelfth non-IDR parameter indicating whether temporal motion vector predictors can be used for inter prediction; wherein the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter are encoded or decoded consecutively without any other bits or syntax between the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter in or from an encoded bitstream associated with the sequence of video. In an embodiment of the first aspect, an order in the encoded bitstream is the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter. In an embodiment of the first aspect, the non-IDR flag is set to a first value to enable a non-IDR picture mode or set to a second value to disable the non-IDR picture mode. In an embodiment of the first aspect, the non-IDR flag indicates the non-IDR mode is disabled, not encoding or decoding the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter in or from the encoded bitstream associated with the sequence of video. In an embodiment of the first aspect, an order in the encoded bitstream varies among the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter. In an embodiment of the first aspect, the method further comprises: encoding or decoding, by the computing device, a first IDR parameter indicating if sample adaptive offset (SAO) is enabled for a luma component of the sequence of video, wherein the first IDR parameter is encoded or decoded consecutively without any other bits or syntax between the twelfth non-IDR parameter and first IDR parameter. In an embodiment of the first aspect, the method further comprises: encoding or decoding, by the computing device, a second IDR parameter indicating if sample adaptive offset (SAO) is enabled for a chroma component of the sequence of video, wherein the second IDR parameter is encoded or decoded consecutively without any other bits or syntax between the first IDR parameter and second IDR parameter. In an embodiment of the first aspect, all of the non-IDR parameters in a slice are grouped under a single non-IDR flag. In an embodiment of the first aspect, the non-IDR flag is located in a slice header.

In a second aspect, a decoder is disclosed comprising: one or more computer processors; and a non-transitory computer-readable storage medium comprising instructions that, when executed, control the one or more computer processors to be configured for: determining an encoded bitstream; evaluating, by the computing device, a single conditional statement once to determine if a current picture is a non-IDR picture; based on the evaluating of the single conditional statement, when a non-IDR flag indicates a non-IDR picture is present, performing: decoding a first non-IDR parameter indicating a picture order count modulo MaxPicOrderCntLsb for the current picture; decoding a second non-IDR parameter indicating how a short-term picture set of the current picture is created; decoding a third non-IDR parameter indicating an index to a list of the short-term reference picture sets used for creation of a reference picture set of the current picture; decoding a fourth non-IDR parameter indicating a number of candidate long-term reference pictures that are included in a long-term reference picture set of the current picture; decoding a fifth non-IDR parameter indicating the number of long-term reference pictures that are included in the long-term reference picture set of the current picture; decoding a sixth non-IDR parameter indicating an index into a list of candidate long-term reference pictures for identification of a picture that is included in the long-term reference picture set of the current picture; decoding a seventh non-IDR parameter indicating a value of a picture order count modulo MaxPicOrderCntLsb of an i-th long-term reference picture that is included in the long-term reference picture set of the current picture; decoding an eighth non-IDR parameter indicating whether the i-th long term reference picture is used for reference by the current picture; decoding a ninth non-IDR parameter indicating how to calculate a picture order of the long term reference picture set of the current picture; decoding a tenth non-IDR parameter indicating the value of most significant bits of a picture order count value of the i-th long-term reference picture that is included in the long-term reference picture set of the current picture; decoding an eleventh non-IDR parameter indicating if temporal motion vector predictors are used in the sequence of video; decoding a twelfth non-IDR parameter indicating whether temporal motion vector predictors can be used for inter prediction; wherein the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter are decoded consecutively without any other bits or syntax between the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter from the encoded bitstream associated with the sequence of video. In an embodiment of the second aspect, an order in the encoded bitstream is the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter. In an embodiment of the second aspect, the non-IDR flag is set to a first value to enable a non-IDR picture mode or set to a second value to disable the non-IDR picture mode. In an embodiment of the second aspect, when the non-IDR flag indicates the non-IDR mode is disabled, not decoding the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter from the encoded bitstream associated with the sequence of video. In an embodiment of the second aspect, an order in the encoded bitstream varies among the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter. In an embodiment of the second aspect, all of the non-IDR parameters in a slice are grouped under a single non-IDR flag. In an embodiment of the second aspect, the non-IDR flag is located in a slice header.

In a third aspect, an encoder is disclosed comprising: one or more computer processors; and a non-transitory computer-readable storage medium comprising instructions that, when executed, control the one or more computer processors to be configured for: evaluating a single conditional statement once to determine if a current picture is a non-IDR picture; based on the evaluating of the single conditional statement, when a non-IDR flag indicates a non-IDR picture is present, performing: encoding a first non-IDR parameter indicating a picture order count modulo MaxPicOrderCntLsb for the current picture; encoding a second non-IDR parameter indicating how a short-term picture set of the current picture is created; encoding a third non-IDR parameter indicating an index to a list of the short-term reference picture sets used for creation of a reference picture set of the current picture; encoding a fourth non-IDR parameter indicating a number of candidate long-term reference pictures that are included in a long-term reference picture set of the current picture; encoding a fifth non-IDR parameter indicating the number of long-term reference pictures that are included in the long-term reference picture set of the current picture; encoding a sixth non-IDR parameter indicating an index into a list of candidate long-term reference pictures for identification of a picture that is included in the long-term reference picture set of the current picture; encoding a seventh non-IDR parameter indicating a value of a picture order count modulo MaxPicOrderCntLsb of an i-th long-term reference picture that is included in the long-term reference picture set of the current picture; encoding an eighth non-IDR parameter indicating whether the i-th long term reference picture is used for reference by the current picture; encoding a ninth non-IDR parameter indicating how to calculate a picture order of the long term reference picture set of the current picture; encoding a tenth non-IDR parameter indicating the value of most significant bits of a picture order count value of the i-th long-term reference picture that is included in the long-term reference picture set of the current picture; encoding an eleventh non-IDR parameter indicating if temporal motion vector predictors are used in the sequence of video; encoding a twelfth non-IDR parameter indicating whether temporal motion vector predictors can be used for inter prediction; wherein the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter are encoded consecutively without any other bits or syntax between the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter in an encoded bitstream associated with the sequence of video. In an embodiment of the third aspect, an order in the encoded bitstream is the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter. In an embodiment of the third aspect, an order in the encoded bitstream varies among the first non-IDR parameter, the second non-IDR parameter, the third non-IDR parameter, the fourth non-IDR parameter, the fifth non-IDR parameter, the sixth non-IDR parameter, the seventh non-IDR parameter, the eighth non-IDR parameter, the ninth non-IDR parameter, the tenth non-IDR parameter, the eleventh non-IDR parameter and the twelfth non-IDR parameter. In an embodiment of the third aspect, all of the non-IDR parameters in a slice are grouped under a single non-IDR flag.

### BRIEF DESCRIPTION OF THE DRAWINGS

The details of the present disclosure, both as to its structure and operation, may be understood in part by study of the accompanying drawings, in which like reference numerals refer to like parts. The drawings are not necessarily to scale, emphasis instead being placed upon illustrating the principles of the disclosure.
FIG. 1A is a video system in which the various embodiments of the disclosure may be used;
FIG. 1B is a computer system on which embodiments of the disclosure may be implemented;
FIGS. 2A, 2B, 3A and 3B illustrate certain video encoding principles according to embodiments of the disclosure;
FIGS. 4A and 4B show possible architectures for an encoder and a decoder according to embodiments of the disclosure;
FIGS. 5A and 5B illustrate further video coding principles according to embodiments of the disclosure;
Figures 6A through 6C together illustrate an example of a syntax that describes a grouping of the parameters for non-IDR picture mode according to an embodiment of the disclosure; and
Figures 7A through 7C together illustrate an example of a syntax that describes a grouping of the parameters for non-IDR picture mode according to another embodiment of the disclosure.

### DETAILED DESCRIPTION

In this disclosure, the term "coding" refers to encoding that occurs at the encoder or decoding that occurs at the decoder. Similarly, the term coder refers to an encoder, a decoder, or a combined encoder/decoder (CODEC). The terms coder, encoder, decoder and CODEC all refer to specific machines designed for the coding (encoding and/or decoding) of image and/or video data consistent with this disclosure. Image and video data generally consist of three components- one for a luma component which represents brightness of a pixel and two for chroma components which represent color information of a pixel.

The present discussion begins with a very brief overview of some terms and techniques known in the art of digital image compression. This overview is not meant to teach the known art in any detail. Those skilled in the art know how to find greater details in textbooks and in the relevant standards.

An example of a video system in which an embodiment of the disclosure may be used will now be described. It is understood that elements depicted as function blocks in the figures may be implemented as hardware, software, or a combination thereof. Furthermore, embodiments of the disclosure may also be employed on other systems, such as on a personal computer, smartphone or tablet computer.

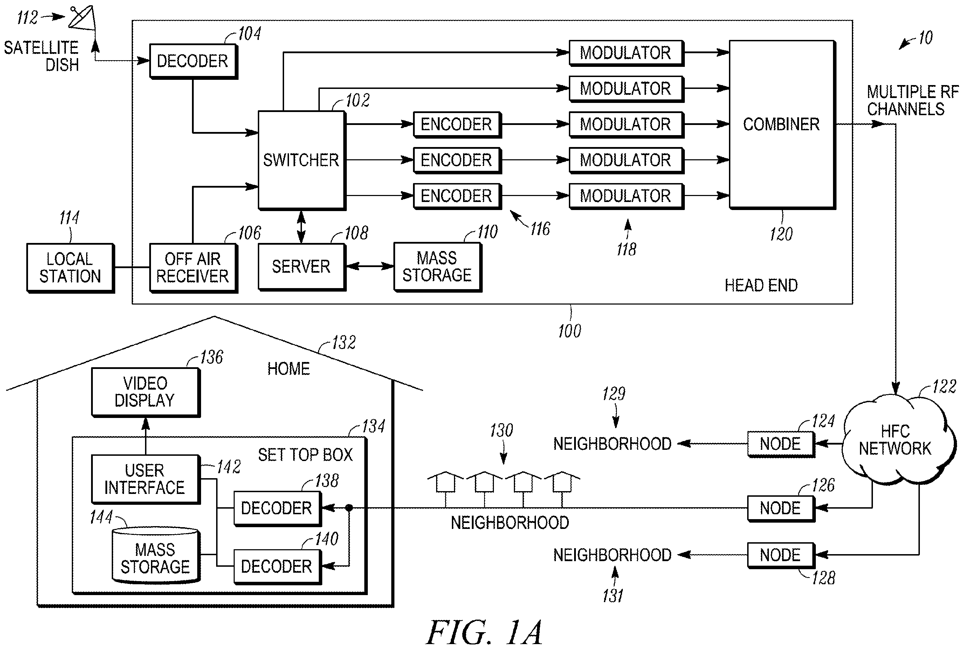

Referring to FIG. 1A, a video system, generally labeled 10, may include a head end 100 of a cable television network. The head end 100 may be configured to deliver video content to neighborhoods 129, 130 and 131. The head end 100 may operate within a hierarchy of head ends, with the head ends higher in the hierarchy generally having greater functionality. The head end 100 may be communicatively linked to a satellite dish 112 and receive video signals for non-local programming from it. The head end 100 may also be communicatively linked to a local station 114 that delivers local programming to the head end 100. The head end 100 may include a decoder 104 that decodes the video signals received from the satellite dish 112, an off-air receiver 106 that receives the local programming from the local station 114, a switcher 102 that routes data traffic among the various components of the head end 100, encoders 116 that encode video signals for delivery to customers, modulators 118 that modulate signals for delivery to customers, and a combiner 120 that combines the various signals into a single, multi-channel transmission.

The head end 100 may also be communicatively linked to a hybrid fiber cable (HFC) network 122. The HFC network 122 may be communicatively linked to a plurality of nodes 124, 126, and 128. Each of the nodes 124, 126, and 128 may be linked by coaxial cable to one of the neighborhoods 129, 130 and 131 and deliver cable television signals to that neighborhood. One of the neighborhoods 130 of FIG. 1A is shown in more detail. The neighborhood 130 may include a number of residences, including a home 132 shown in FIG. 1A. Within the home 132 may be a set-top box 134 communicatively linked to a video display 136. The set-top box 134 may include a first decoder 138 and a second decoder 140. The first and second decoders 138 and 140 may be communicatively linked to a user interface 142 and a mass storage device 144. The user interface 142 may be communicatively linked to the video display 136.

During operation, head end 100 may receive local and nonlocal programming video signals from the satellite dish 112 and the local station 114. The nonlocal programming video signals may be received in the form of a digital video stream, while the local programming video signals may be received as an analog video stream. In some embodiments, local programming may also be received as a digital video stream. The digital video stream may be decoded by the decoder 104 and sent to the switcher 102 in response to customer requests. The head end 100 may also include a server 108 communicatively linked to a mass storage device 110. The mass storage device 110 may store various types of video content, including video on demand (VOD), which the server 108 may retrieve and provide to the switcher 102. The switcher 102 may route local programming directly to the modulators 118, which modulate the local programming, and route the non-local programming (including any VOD) to the encoders 116. The encoders 116 may digitally encode the non-local programming. The encoded non-local programming may then be transmitted to the modulators 118. The combiner 120 may be configured to receive the modulated analog video data and the modulated digital video data, combine the video data and transmit it via multiple radio frequency (RF) channels to the HFC network 122.

The HFC network 122 may transmit the combined video data to the nodes 124, 126 and 128, which may retransmit the data to their respective neighborhoods 129, 130 and 131. The home 132 may receive this video data at the set-top box 134, more specifically at the first decoder 138 and the second decoder 140. The first and second decoders 138 and 140 may decode the digital portion of the video data and provide the decoded data to the user interface 142, which then may provide the decoded data to the video display 136.

The encoders 116 and the decoders 138 and 140 of FIG. 1A (as well as all of the other steps and functions described herein) may be implemented as computer code comprising computer readable instructions stored on a computer readable storage device, such as memory or another type of storage device. The computer code may be executed on a computer system by a processor, such as an application-specific integrated circuit (ASIC), or other type of circuit. For example, computer code for implementing the encoders 116 may be executed on a computer system (such as a server) residing in the headend 100. Computer code for the decoders 138 and 140, on the other hand, may be executed on the set-top box 134, which constitutes a type of computer system. The code may exist as software programs comprised of program instructions in source code, object code, executable code or other formats. It should be appreciated that the computer code for the various components shown in FIG. 1A may reside anywhere in system 10 or elsewhere (such as in a cloud network), that is determined to be desirable or advantageous. Furthermore, the computer code may be located in one or more components, provided the instructions may be effectively performed by the one or more components.

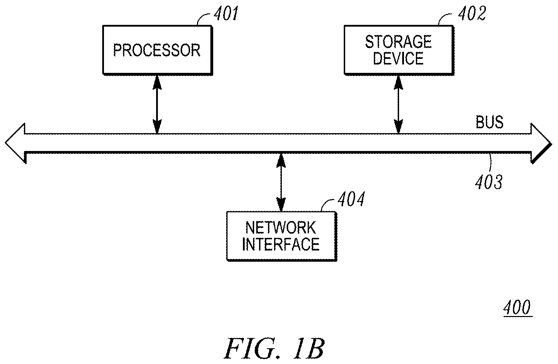

FIG. 1B shows an example of a computer system on which computer code for the encoders 116 and the decoders 138 and 140 may be executed. The computer system, generally labeled 400, includes a processor 401, or processing circuitry, that may implement or execute software instructions performing some or all of the methods, functions and other steps described herein. Commands and data from processor 401 may be communicated over a communication bus 403, for example. Computer system 400 may also include a computer readable storage device 402, such as random access memory (RAM), where the software and data for processor 401 may reside during runtime. Storage device 402 may also include non-volatile data storage. Computer system 400 may include a network interface 404 for connecting to a network. Other known electronic components may be added or substituted for the components depicted in the computer system 400. The computer system 400 may reside in the headend 100 and execute the encoders 116, and may also be embodied in the set-top box 134 to execute the decoders 138 and 140. Additionally, the computer system 400 may reside in places other than the headend 100 and the set-top box 134, and may be miniaturized so as to be integrated into a smartphone or tablet computer.

Video encoding systems may achieve compression by removing redundancy in the video data, e.g., by removing those elements that can be discarded without greatly adversely affecting reproduction fidelity. Because video signals take place in time and space, most video encoding systems exploit both temporal and spatial redundancy present in these signals. Typically, there is high temporal correlation between successive frames. This is also true in the spatial domain for pixels which are close to each other. Thus, high compression gains are achieved by carefully exploiting these spatio-temporal correlations.

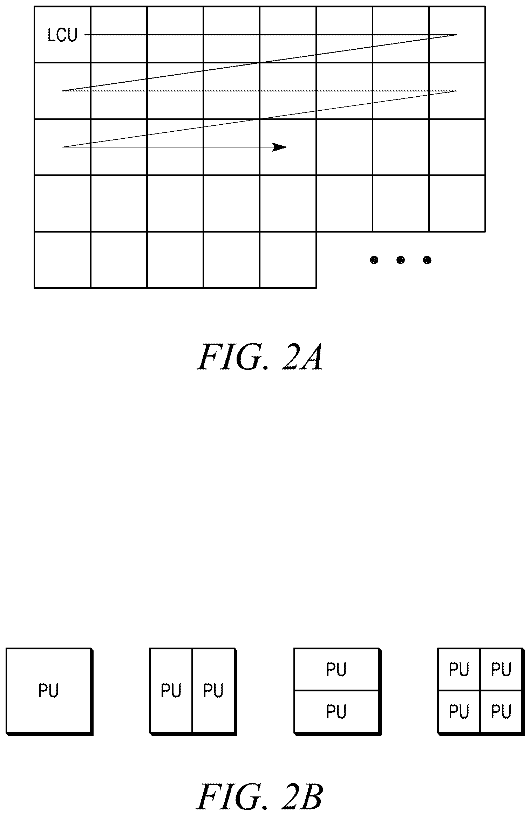

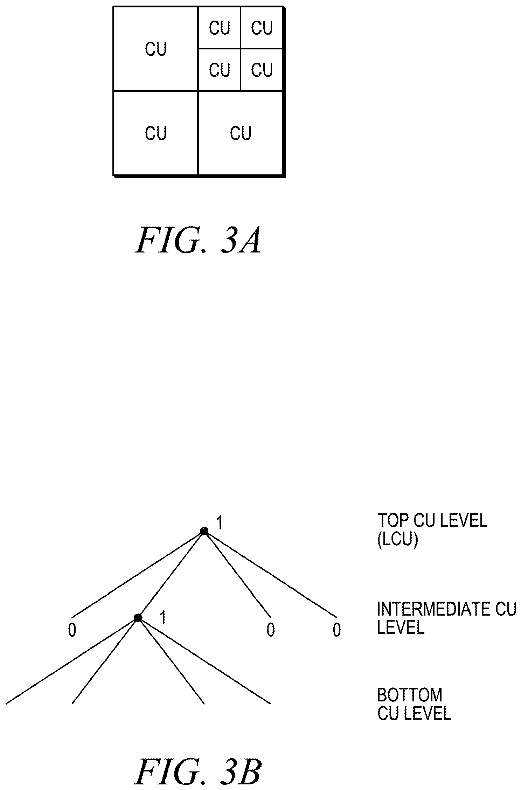

A high-level description of how video data gets encoded and decoded by the encoders 116 and the decoders 138 and 140 in an embodiment of the disclosure will now be provided. In this embodiment, the encoders and decoders operate according to a High Efficiency Video Coding (HEVC) method. HEVC is a block-based hybrid spatial and temporal predictive coding method. In HEVC, an input picture is first divided into square blocks, called LCUs (largest coding units) or CTBs (coding tree blocks), as shown in FIG. 2A. Unlike other video coding standards, in which the basic coding unit is a macroblock of 16x16 pixels, in HEVC, the LCU can be as large as 128x128 pixels. An LCU can be divided into four square blocks, called CUs (coding units), which are a quarter of the size of the LCU. Each CU can be further split into four smaller CUs, which are a quarter of the size of the original CU. The splitting process can be repeated until certain criteria are met. FIG. 3A shows an example of LCU partitioned into CUs. In general, for HEVC, the smallest CU used (e.g., a leaf node as described in further detail below) is considered a CU.

How a particular LCU is split into CUs can be represented by a quadtree. At each node of the quadtree, a flag is set to "1" if the node is further split into sub-nodes. Otherwise, the flag is unset at "0." For example, the LCU partition of FIG. 3A can be represented by the quadtree of FIG. 3B. These "split flags" may be jointly coded with other flags in the video bitstream, including a skip mode flag, a merge mode flag, and a predictive unit (PU) mode flag, and the like. In the case of the quadtree of FIG. 3B, the split flags 10100 could be coded as overhead along with the other flags. Syntax information for a given CU may be defined recursively, and may depend on whether the CU is split into sub-CUs.

A node that is not split (e.g., a node corresponding a terminal, or "leaf' node in a given quadtree) may include one or more prediction units (PUs). In general, a PU represents all or a portion of the corresponding CU, and includes data for retrieving a reference sample for the PU for purposes of performing prediction for the CU. Thus, at each leaf of a quadtree, a CU of 2Nx2N can possess one of four possible patterns (NxN, Nx2N, 2NxN and 2Nx2N), as shown in FIG. 2B. While shown for a 2Nx2N CU, other PUs having different dimensions and corresponding patterns (e.g., square or rectangular) may be used. A CU can be either spatially or temporally predictive coded. If a CU is coded in intra mode, each PU of the CU can have its own spatial prediction direction. If a CU is coded in inter mode, each PU of the CU can have its own motion vector(s) and associated reference picture(s). The data defining the motion vector may describe, for example, a horizontal component of the motion vector, a vertical component of the motion vector, a resolution for the motion vector (e.g., one-quarter pixel precision or one-eighth pixel precision), a reference frame to which the motion vector points, and/or a reference list (e.g., list 0 or list 1) for the motion vector. Additionally, a motion vector predictor index may be used to identify a motion vector predictor (e.g., MV of left neighbor, MV of co-located neighbor). Data for the CU defining the one or more PUs of the CU may also describe, for example, partitioning of the CU into the one or more PUs. Partitioning modes may differ between whether the CU is uncoded, intra-prediction mode encoded, or inter-prediction mode encoded.

In general, in intra-prediction encoding, a high level of spatial correlation is present between neighboring blocks in a frame. Consequently, a block can be predicted from the nearby encoded and reconstructed blocks, giving rise to the intra prediction. In some embodiments, the prediction can be formed by a weighted average of the previously encoded samples, located above and to the left of the current block. The encoder may select the mode that minimizes the difference or cost between the original and the prediction and signals this selection in the control data.

In general, in inter-prediction encoding, video sequences have high temporal correlation between frames, enabling a block in the current frame to be accurately described by a region (or two regions in the case of bi-prediction) in the previously coded frames, which are known as reference frames. Inter-prediction utilizes previously encoded and reconstructed reference frames to develop a prediction using a block-based motion estimation and compensation technique.

Following intra-predictive or inter-predictive encoding to produce predictive data and residual data, and following any transforms (such as the 4x4 or 8x8 integer transform used in H.264/AVC or a discrete cosine transform (DCT)) to produce transform coefficients, quantization of transform coefficients may be performed. In some embodiments, any transform operations may be bypassed using e.g., a transform skip mode in HEVC. Quantization generally refers to a process in which transform coefficients are quantized to possibly reduce the amount of data used to represent the coefficients, e.g., by converting high precision transform coefficients into a finite number of possible values. These steps will be discussed in more detail below.

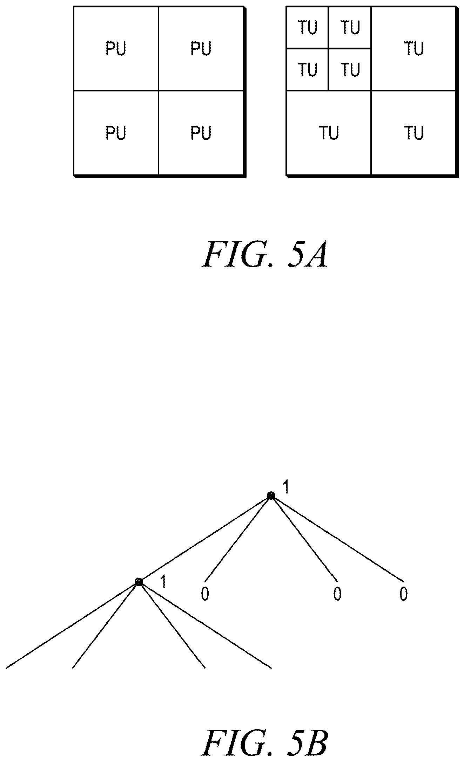

Each CU can also be divided into transform units (TUs). In some embodiments, a block transform operation is performed on one or more TUs, to decorrelate the pixels within the block and compact the block energy into the low order coefficients of the transform block. In some embodiments, one transform of 8x8 or 4x4 may be applied. In other embodiments, a set of block transforms of different sizes may be applied to a CU, as shown in FIG. 5A where the left block is a CU partitioned into PUs and the right block is the associated set of transform units (TUs). The size and location of each block transform within a CU is described by a separate quadtree, called RQT. FIG. 5B shows the quadtree representation of TUs for the CU in the example of FIG. 5A. In this example, 11000 is coded and transmitted as part of the overhead. As is appreciated, CUs, PUs, and TUs may be of NxN in size or MxN (or NxM), where N≠M.

The TUs and PUs of any given CU may be used for different purposes. TUs are typically used for transformation, quantizing and coding operations, while PUs are typically used for spatial and temporal prediction. There is not necessarily a direct relationship between the number of PUs and the number of TUs for a given CU.

Video blocks may comprise blocks of pixel data in the pixel domain, or blocks of transform coefficients in the transform domain, e.g., following application of a transform, such as a discrete cosine transform (DCT), an integer transform, a wavelet transform, or a conceptually similar transform to residual data for a given video block, wherein the residual data represents pixel differences between video data for the block and predictive data generated for the block. In some cases, video blocks may comprise blocks of quantized transform coefficients in the transform domain, wherein, following application of a transform to residual data for a given video block, the resulting transform coefficients are also quantized. In video encoding, quantization is the step that introduces loss, so that a balance between bitrate and reconstruction quality can be established. These steps will be discussed further below.

Block partitioning serves an important purpose in block-based video coding techniques. Using smaller blocks to code video data may result in better prediction of the data for locations of a video frame that include high levels of detail, and may therefore reduce the resulting error (e.g., deviation of the prediction data from source video data), represented as residual data. In general, prediction exploits the spatial or temporal redundancy in a video sequence by modeling the correlation between sample blocks of various dimensions, such that only a small difference between the actual and the predicted signal needs to be encoded. A prediction for the current block is created from the samples which have already been encoded. While potentially reducing the residual data, such techniques may, however, require additional syntax information to indicate how the smaller blocks are partitioned relative to a video frame, and may result in an increased coded video bitrate. Accordingly, in some techniques, block partitioning may depend on balancing the desirable reduction in residual data against the resulting increase in bitrate of the coded video data due to the additional syntax information.

In general, blocks and the various partitions thereof (e.g., sub-blocks) may be considered video blocks. In addition, a slice may be considered to be a plurality of video blocks (e.g., macroblocks, or coding units), and/or sub-blocks (partitions of macroblocks, or sub-coding units such as sub-blocks of PUs, TUs, etc.). Each slice may be an independently decodable unit of a video frame. Alternatively, frames themselves may be decodable units, or other portions of a frame may be defined as decodable units. Furthermore, a GOP, also referred to as a group of pictures, may be defined as a decodable unit.

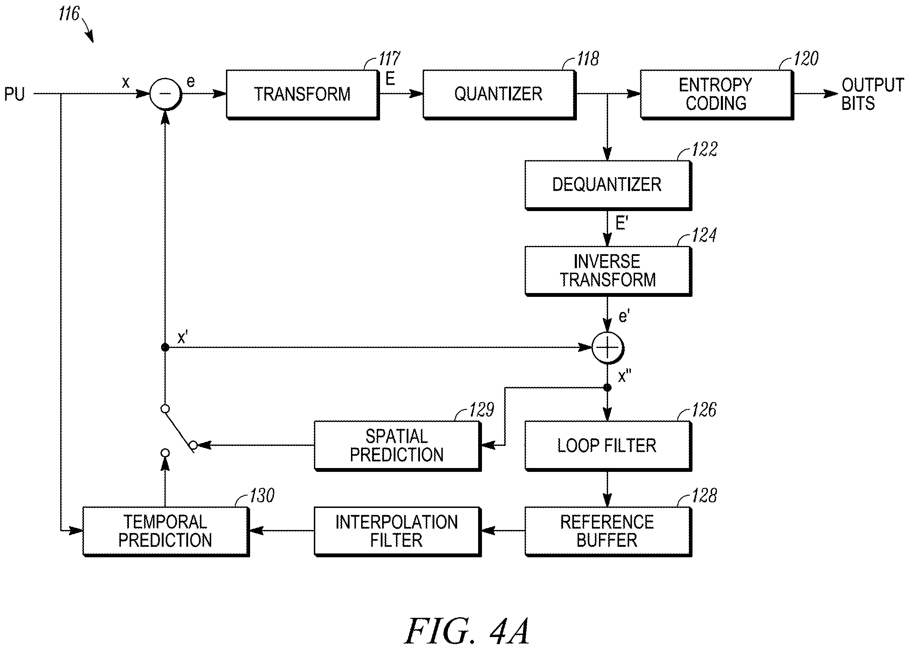

The encoders 116 (FIG. 1A) may be, according to an embodiment of the disclosure, composed of several functional modules as shown in FIG. 4A. These modules may be implemented as hardware, software, or any combination of the two. Given a current PU, x, a prediction PU, x', may first be obtained through either spatial prediction or temporal prediction. This spatial or temporal prediction may be performed by a spatial prediction module 129 or a temporal prediction module 130 respectively.

There are several possible spatial prediction directions that the spatial prediction module 129 can perform per PU, including horizontal, vertical, 45-degree diagonal, 135-degree diagonal, DC, Planar, etc. In general, spatial prediction may be performed differently for luma PU and chroma PU. For example, including the Luma intra modes, an additional mode, called IntraFromLuma, may be used for the Chroma intra prediction mode. A syntax indicates the spatial prediction direction per PU.

The encoder 116 (FIG. 1A) may perform temporal prediction through motion estimation operation. Specifically, the temporal prediction module 130 (FIG. 4A) may search for a best match prediction for the current PU over reference pictures. The best match prediction may be described by motion vector (MV) and associated reference picture (refldx). Generally, a PU in B pictures can have up to two MVs. Both MV and refldx may be part of the syntax in the bitstream.

The prediction PU may then be subtracted from the current PU, resulting in the residual PU, e. The residual CU, generated by grouping the residual PU, e, associated with the CU, may then be transformed by a transform module 117, one transform unit (TU) at a time, resulting in the residual PU in the transform domain, E. To accomplish this task, the transform module 117 may use e.g., either a square or a non-square block transform.

Referring back to FIG. 4A, the transform coefficients E, may then be quantized by a quantizer module 118, converting the high precision transform coefficients into a finite number of possible values. The quantization process may reduce the bit depth associated with some or all of the coefficients. For example, an n-bit value may be rounded down to an m-bit value during quantization, where n is greater than m. In some embodiments, external boundary conditions are used to produce modified one or more transform coefficients. For example, a lower range or value may be used in determining if a transform coefficient is given a nonzero value or just zeroed out. As should be appreciated, quantization is a lossy operation and the loss by quantization generally cannot be recovered.

The quantized coefficients may then be entropy coded by an entropy coding module 120, resulting in the final compression bits. The specific steps performed by the entropy coding module 120 will be discussed below in more detail. It should be noted that the prediction, transform, and quantization described above may be performed for any block of video data, e.g., to a PU and/or TU of a CU, or to a macroblock, depending on the specified coding standard.

To facilitate temporal and spatial prediction, the encoder 116 may also take the quantized transform coefficients E and dequantize them with a dequantizer module 122 resulting in the dequantized transform coefficients E'. The dequantized transform coefficients are then inverse transformed by an inverse transform module 124, resulting in the reconstructed residual PU, e'. The reconstructed residual PU, e', is then added to the corresponding prediction, x', either spatial or temporal, to form a reconstructed PU, x".

Referring still to FIG. 4A, a deblocking filter (DBF) operation may be performed on the reconstructed PU, x", first to reduce blocking artifacts. A sample adaptive offset (SAO) process may be conditionally performed after the completion of the deblocking filter process for the decoded picture, which compensates the pixel value offset between reconstructed pixels and original pixels. In some embodiments, both the DBF operation and SAO process are implemented by adaptive loop filter functions, which may be performed conditionally by a loop filter module 126 over the reconstructed PU. In some embodiments, the adaptive loop filter functions minimize the coding distortion between the input and output pictures. In some embodiments, loop filter module 126 operates during an inter-picture prediction loop. If the reconstructed pictures are reference pictures, they may be stored in a reference buffer 128 for future temporal prediction.

HEVC specifies two loop filters that are applied in order with the deblocking filter (DBF) applied first and the sample adaptive offset (SAO) filter applied afterwards. The DBF is similar to the one used by H.264/MPEG-4 AVC but with a simpler design and better support for parallel processing. In HEVC the DBF only applies to an 8x8 sample grid while with H.264/MPEG-4 AVC the DBF applies to a 4x4 sample grid. DBF uses an 8x8 sample grid since it causes no noticeable degradation and significantly improves parallel processing because the DBF no longer causes cascading interactions with other operations. Another change is that HEVC only allows for three DBF strengths of 0 to 2. HEVC also requires that the DBF first apply horizontal filtering for vertical edges to the picture and only after that does it apply vertical filtering for horizontal edges to the picture. This allows for multiple parallel threads to be used for the DBF.

The SAO filter process is applied after the DBF and is made to allow for better reconstruction of the original signal amplitudes by using e.g., a look up table that includes some parameters that are based on a histogram analysis made by the encoder. The SAO filter has two basic types which are the edge offset (EO) type and the band offset (BO) type. One of the SAO types can be applied per coding tree block (CTB). The edge offset (EO) type has four sub-types corresponding to processing along four possible directions (e.g., horizontal, vertical, 135 degree, and 45 degree). For a given EO sub-type, the edge offset (EO) processing operates by comparing the value of a pixel to two of its neighbors using one of four different gradient patterns. An offset is applied to pixels in each of the four gradient patterns. For pixel values that are not in one of the gradient patterns, no offset is applied. The band offset (BO) processing is based directly on the sample amplitude which is split into 32 bands. An offset is applied to pixels in 16 of the 32 bands, where a group of 16 bands corresponds to a BO sub-type. The SAO filter process was designed to reduce distortion compared to the original signal by adding an offset to sample values. It can increase edge sharpness and reduce ringing and impulse artifacts.

In an embodiment of the disclosure, intra pictures (such as an I picture) and inter pictures (such as P pictures or B pictures) are supported by the encoder 116 (FIG. 1A). An intra picture may be coded without referring to other pictures. Hence, spatial prediction may be used for a CU/PU inside an intra picture. An intra picture provides a possible point where decoding can begin. On the other hand, an inter picture generally aims for high compression. Inter picture supports both intra and inter prediction. A CU/PU in inter picture is either spatially or temporally predictive coded. Temporal references are the previously coded intra or inter pictures.

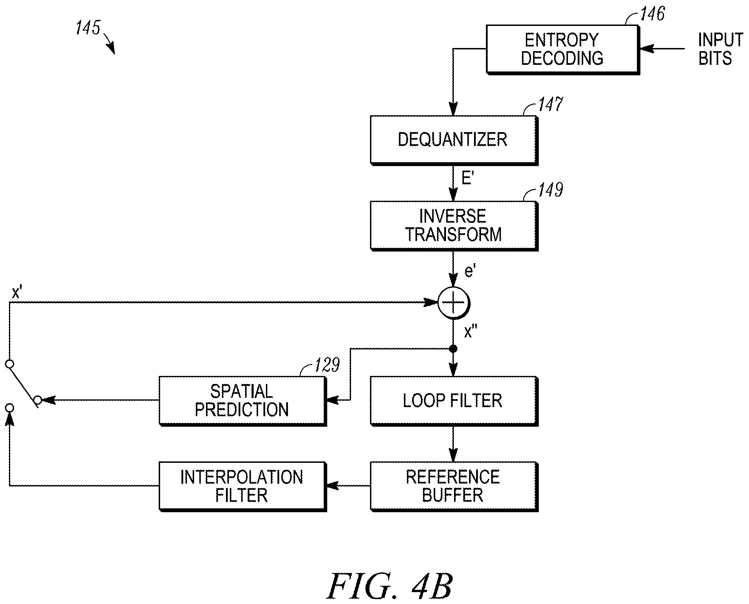

When the decoders 138 and 140 (FIG. 1A) receive the bitstream, they perform the functions shown in e.g., FIG. 4B. An entropy decoding module 146 of the decoder 145 may decode the sign values, significance map and non-zero coefficients to recreate the quantized and transformed coefficients. In decoding the significance map, the entropy decoding module 146 may perform the reverse of the procedure described in conjunction with the entropy coding module 120 - decoding the significance map along a scanning pattern made up of scanning lines. The entropy decoding module 146 then may provide the coefficients to a dequantizer module 147, which dequantizes the matrix of coefficients, resulting in E'. The dequantizer module 147 may provide the dequantized coefficients to an inverse transform module 149. The inverse transform module 149 may perform an inverse transform operation on the coefficients resulting in e'. Filtering and spatial prediction may be applied in a manner described in conjunction with FIG. 4A.

As is known by those of skill in the art, encoders operate by encoding slices of a video stream. As mentioned above, a slice may be considered to be a plurality of video blocks (e.g., macroblocks, or coding units), and/or sub-blocks (partitions of macroblocks, or sub-coding units such as sub-blocks of PUs, TUs, etc.). Each slice may be an independently or dependent decodable unit of a video frame.

Encoders 116 may use a flag !IdrPicFlag that indicates whether or not a non-instantaneous decoding refresh (non-IDR) picture is present in a sequence of video. An IDR picture contains only I slices, and may be the first picture in the bitstream in decoding order, or may appear later in the bitstream. Each IDR picture is the first picture of a coded video sequence (CVS) in decoding order. Thus, non-IDR pictures may include I-, B- and P- slices.

In an example, when the flag !IdrPicFlag is set to a first value, such as 0, then non-IDR picture data is not present in the sequence of video. However, when the flag !IdrPicFlag is equal to a second value, such as 1, then it is possible that non-IDR picture data is present in the sequence of video.

In one embodiment, the flag !IdrPicFlag is calculated according to the Network Abstraction unit (NAL unit) type information specified in the header of NAL that includes the current slice header. The slice header is a header for a slice. In this case, the flag !IdrPicFlag governs whether non-IDR picture data may be found in the picture that is associated with the slice header. Although the flag !IdrPicFlag is discussed as being in the slice header, the flag !IdrPicFlag may be located in other headers, such as in a picture header. If the flag !IdrPicFlag is in the picture header, the flag !IdrPicFlag applies to all pictures that are associated with this picture header.

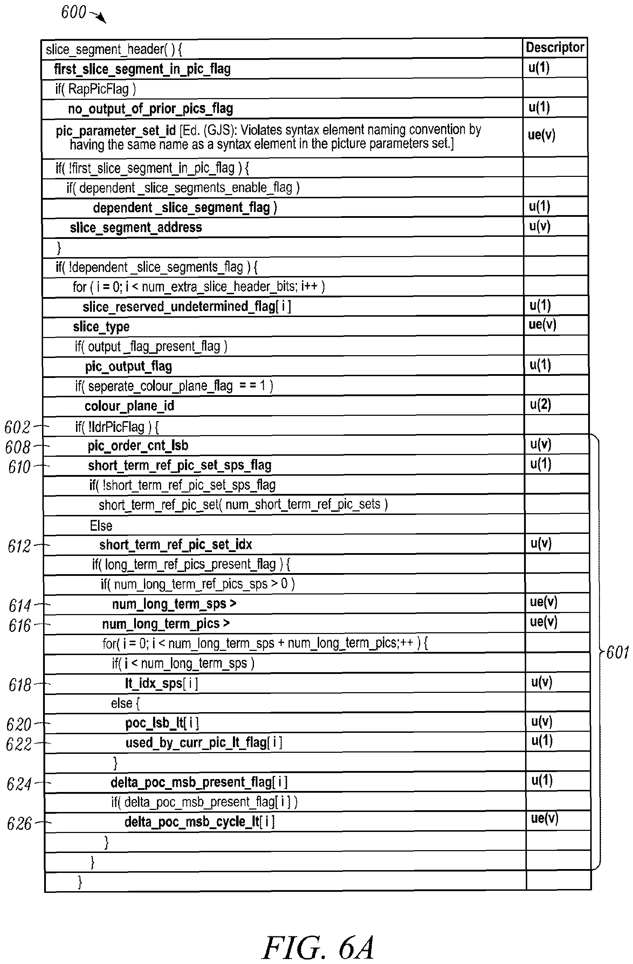

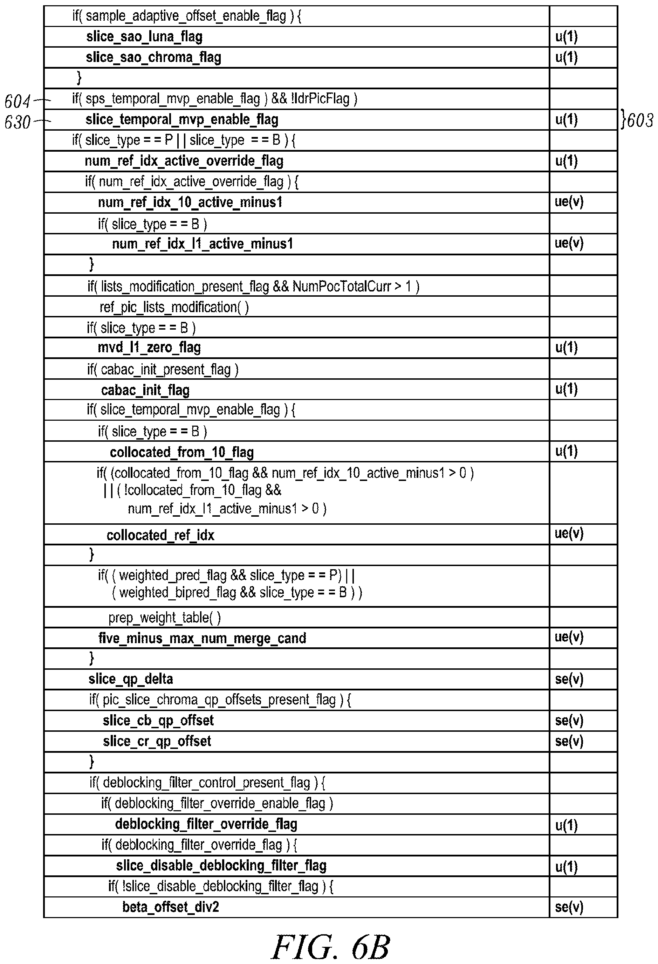

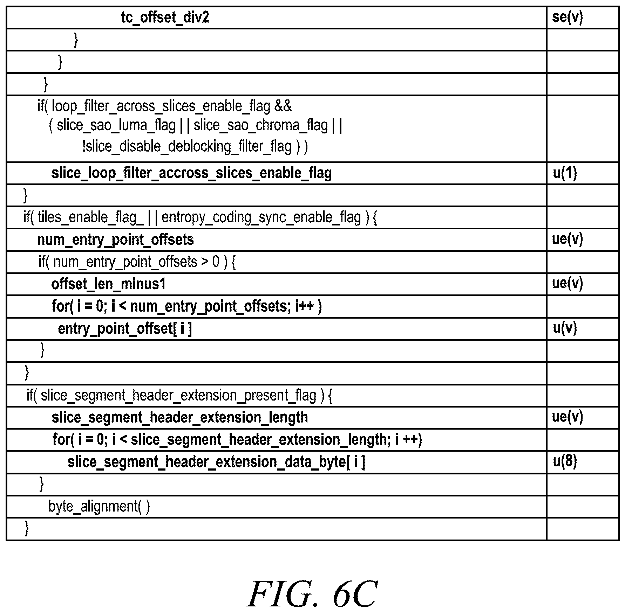

FIG. 6 illustrates an example slice header syntax 600 in current HEVC. Slice header syntax 600 describes two groupings 601 and 603 of the parameters for non-IDR pictures according to one embodiment. Syntax 600 governs how encoders 116 encode the slice header and how decoders 138, 140 decode the slice header. In some embodiments, syntax 600 is located in or is part of a sequence parameter set (SPS) header. Consequently, in such embodiments, the non-IDR flag is located in the SPS header.

At 602, the flag !IdrPicFlag is shown. Also at 604, another flag !IdrPicFlag in combination with flag sps_temporal_mvp_enable_flag is shown. The flag !IdrPicFlag may indicate whether a non-IDR picture is present for the sequence of pictures. For example, as described above, encoders 116 may encode the value for the flag !IdrPicFlag as 0 or 1. The sps_temporal_mvp_enable_flag equal to 1 specifies that slice_temporal_mvp_enabled_flag is present in the slice headers of non-IDR pictures in the CVS. The sps_temporal_mvp_enable_flag equal to 0 specifies that slice_temporal_mvp_enabled_flag is not present in slice headers and that temporal motion vector predictors are not used in the CVS.

As shown, flag !IdrPicFlag 602 and flag !IdrPicFlag 604 include a conditional statement (e.g., if statement) that tests whether the flag !IdrPicFlag is enabled or disabled. If the flag !IdrPicFlag is disabled, then encoders 116 do not encode the parameters shown in groupings 601 and 603 in the encoded bitstream. Further, decoders 138, 140 do not attempt to decode the parameters shown in groupings 601 and 602 if the flag !IdrPicFlag is disabled. However, if the flag !IdrPicFlag is enabled, then the conditional statement evaluates to true, and encoders 116 encode the non-IDR picture parameters shown in groupings 601 and 602 in the encoded bitstream and also decoders 138, 140 decode the non-IDR picture parameters from the encoded bitstream.

At 608, syntax 600 includes a parameter pic_order_cnt_lsb. This parameter specifies the picture order count modulo MaxPicOrderCntLsb for the current picture. The length of the pic_order_cnt_lsb syntax element is log2_max_pic_order_cnt_lsb_minus4 + 4 bits. The value of the pic_order_cnt_lsb shall be in the range of 0 to MaxPicOrderCntLsb - 1, inclusive. When pic_order_cnt_lsb is not present, pic_order_cnt_lsb is inferred to be equal to 0.

At 610, syntax 600 includes a parameter short_term_ref_pic_set_sps_flag. This parameter specifies how the short-term picture set of the current picture is created. For example, short_term_ref_pic_set_sps_flag equal to 1 specifies that the short-term reference picture set of the current picture is created using syntax elements in the active SPS. short_term_ref_pic_set_sps_flag equal to 0 specifies that the short-term reference picture set of the current picture is created using syntax elements in the short_term_ref_pic_set() syntax structure in the slice header.

At 612, syntax 600 includes a parameter short_term_ref_pic_set_idx. This parameter specifies the index to the list of the short-term reference picture sets specified in the active SPS that is used for creation of the reference picture set of the current picture. The syntax element short_term_ref_pic_set_idx is represented by Ceil(Log2(num_short_term_ref_pic_sets)) bits. When not present, the value of short_term_ref_pic_set_idx is inferred to be equal to 0. The value of short_term_ref_pic_set_idx shall be in the range of 0 to num_short_term_ref_pic_sets - 1, inclusive.

At 614, syntax 600 includes a parameter num_long_term_sps. This parameter specifies the number of candidate long-term reference pictures specified in the active SPS that are included in the long-term reference picture set of the current picture. The value of num_long_term_sps shall be in the range of 0 to Min(num_long_term_ref_pics_sps, sps_max_dec_pic_buffering_minus1[sps_max_sub_layers_minus1] -NumNegative Pics[StRpsIdx] - NumPositivePics[StRpsIdx]), inclusive. When not present, the value of num_long_term_sps is inferred to be equal to 0.

At 616, syntax 600 includes a parameter num_long_term_pics. This parameter specifies the number of long-term reference pictures specified in the slice header, which are included in the long-term reference picture set of the current picture. The value of num_long_term_pics shall be in the range of 0 to sps_max_dec_pic_buffering_minus1[sps_max_sub_layers_minus1] - NumNegative Pics[StRpsIdx] - NumPositivePics[StRpsIdx] - num_long_term_sps, inclusive. When not present, the value of num_long_term_pics is inferred to be equal to 0.

At 618, syntax 600 includes a parameter lt_idx_sps[1]. This parameter specifies an index into the list of candidate long-term reference pictures specified in the active SPS for identification of the picture that is included in the long-term reference picture set of the current picture. The number of bits used to represent lt_idx_sps[i] is equal to Ceil(Log2(num_long_term_ref_pics_sps)). When not present, the value of lt_idx_sps[i] is inferred to be equal to 0. The value of lt_idx_sps[i] shall be in the range of 0 to num_long_term_ref_pics_sps - 1, inclusive.

At 620, syntax 600 includes a parameter poc_lsb_lt[i]. This parameter specifies the value of the picture order count modulo MaxPicOrderCntLsb of the i-th long-term reference picture that is included in the long-term reference picture set of the current picture. The length of the poc_lsb_lt[i] syntax element is log2_max_pic_order_cnt_lsb_minus4 + 4 bits.

At 622, syntax 600 includes a parameter used_by_curr_pic_lt_flag[i]. This parameter specifies whether the i-th long term reference picture is used for reference by the current picture. A used_by_curr_pic_lt_flag[i] equal to 0 specifies that the i-th long-term reference picture included in the long-term reference picture set of the current picture is not used for reference by the current picture.

The parameters PocLsbLt[i] and UsedByCurrPicLt[i] may be derived as follows:
- If i is less than num_long_term_sps, PocLsbLt[i] is set equal to lt_ref_pic_poc_lsb_sps[lt_idx_sps[i]] and UsedByCurrPicLt[i] is set equal to used_by_curr_pic_lt_sps_flag[lt_idx_sps[i]].
- Otherwise, PocLsbLt[i] is set equal to poc_lsb_lt[i] and UsedByCurrPicLt[i] is set equal to used_by_curr_pic_lt_flag[i].

At 624, syntax 600 includes a parameter delta_poc_msb_present_flag[i]. This parameter specifies if delta_poc_msb_cycle_lt[i] is present, which may be used to calculate the picture order of the long term reference picture set of the current picture. A delta_poc_msb_cycle_lt[i] is equal to 1 specifies that delta_poc_msb_cycle_lt[i] is present. delta_poc_msb_present_flag[i] equal to 0 specifies that delta_poc_msb_cycle_lt[i] is not present.

At 626, syntax 600 includes a parameter delta_poc_msb_cycle_lt[i]. This parameter is used to determine the value of the most significant bits of the picture order count value of the i-th long-term reference picture that is included in the long-term reference picture set of the current picture. When delta_poc_msb_cycle_lt[i] is not present, it is inferred to be equal to 0. The parameter DeltaPocMsbCycleLt[i] is derived as follows:
- if( i = = 0 || i = = num_long_term_sps ) DeltaPocMsbCycleLt[i] = delta_poc_msb_cycle_lt[i]
- else DeltaPocMsbCycleLt[i] = delta_poc_msb_cycle_lt[i] + DeltaPocMsbCycleLt[i - 1]

As described above, at 604, another flag !IdrPicFlag in combination with flag sps_temporal_mvp_enable_flag is shown. At 630, syntax 600 includes a parameter slice_temporal_mvp_enable_flag. This parameter specifies whether temporal motion vector predictors can be used for inter prediction. If slice_temporal_mvp_enabled_flag is equal to 0, the syntax elements of the current picture shall be constrained such that no temporal motion vector predictor is used in decoding of the current picture. If slice_temporal_mvp_enabled_flag is equal to 1, temporal motion vector predictors may be used in decoding of the current picture. When not present, the value of slice_temporal_mvp_enabled_flag is inferred to be equal to 0.

From reviewing FIG. 6, some syntax parameters, even under the same logic conditions, are spread in different locations in the slice header, such as the two groupings 601 and 603, relating to parameters for non-IDR pictures. This spreading of syntax parameters throughout the slice header may be arbitrary, e.g., the location of the s may not necessarily have a causal relationship with other parameters. Such design is less than ideal because it is messy for presentation of slice header syntax and because it may require more logic condition checking.

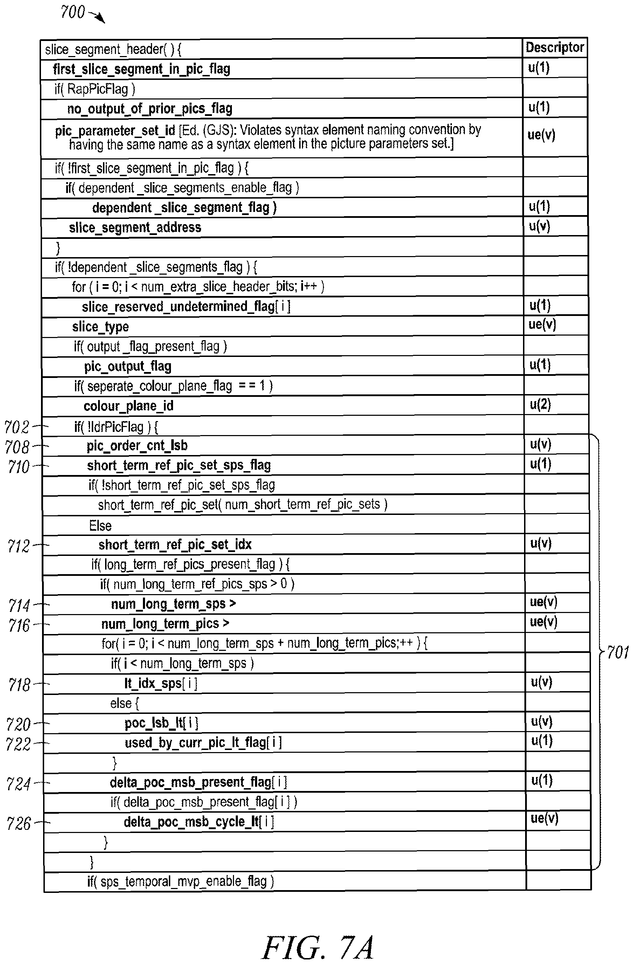

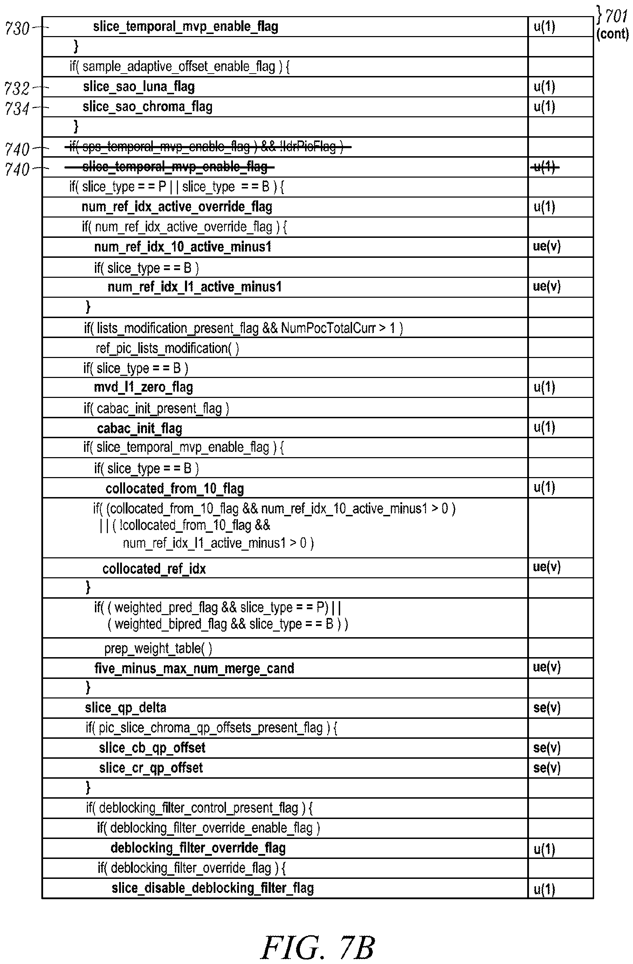

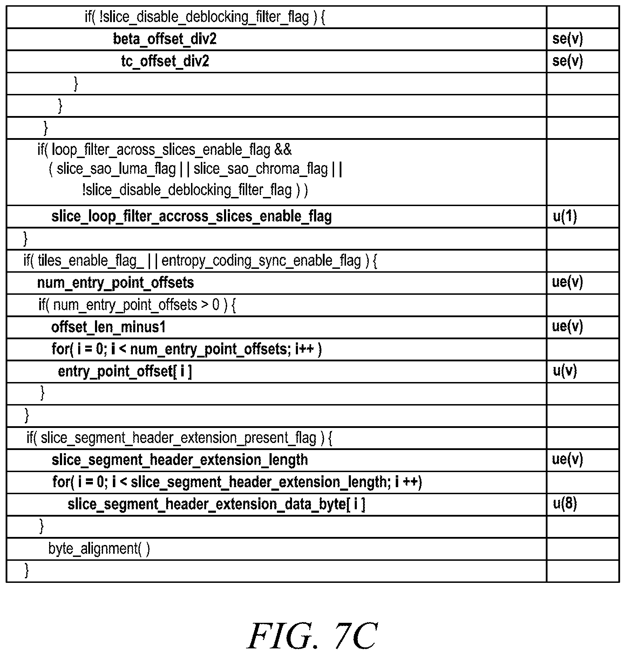

Thus, in order to save logic checks and also have a better presentation, the relative syntax parameters and function calls that are under a same condition (i.e., non-IDR picture) may be grouped together, as shown in FIG. 7. For example, particular embodiments group the parameters for the non-IDR pictures together in grouping 701 in the slice header. For example, encoders 116 encode the non-IDR picture parameters consecutively in the encoded bitstream. Then, decoders 138, 140 may decode the non-IDR picture parameters consecutively when the encoded bitstream is received.

FIG. 7 illustrates an example slice header syntax using such syntax grouping for same non-IDR picture condition in HEVC. Slice header syntax 700 describes a single grouping 701 of the parameters for non-IDR pictures according to one embodiment. Syntax 700 may be for a slice header, but may be used for other headers. Syntax 700 governs how encoders 116 encode the slice header and how decoders 138, 140 decode the SPS header.

At 702, the flag !IdrPicFlag is shown. As described above, the flag !IdrPicFlag may indicate whether a non-IDR picture is present for the sequence of pictures.

As shown, flag !IdrPicFlag 702 includes a conditional statement (e.g., if statement) that tests whether the flag !IdrPicFlag is enabled or disabled. If the flag !IdrPicFlag is disabled, then encoders 116 do not encode the parameters shown in grouping 701 in the encoded bitstream. Further, decoders 138, 140 do not attempt to decode the parameters shown in grouping 701 if the flag !IdrPicFlag is disabled. However, if the flag !IdrPicFlag is enabled, then the conditional statement evaluates to true, and encoders 116 encode the non-IDR picture parameters shown in grouping 701 in the encoded bitstream and also decoders 138, 140 decode the non-IDR picture parameters from the encoded bitstream.

At 708, syntax 700 includes a parameter pic_order_cnt_lsb. As described above, this parameter specifies the picture order count modulo MaxPicOrderCntLsb for the current picture.

At 710, syntax 700 includes a parameter short_term_ref_pic_set_sps_flag. As described above, this parameter specifies how the short-term picture set of the current picture is created.

At 712, syntax 700 includes a parameter short_term_ref_pic_set_idx. As described above, this parameter specifies the index to the list of the short-term reference picture sets specified in the active SPS that is used for creation of the reference picture set of the current picture.

At 714, syntax 700 includes a parameter num_long_term_sps. As described above, this parameter specifies the number of candidate long-term reference pictures specified in the active SPS that are included in the long-term reference picture set of the current picture.

At 716, syntax 700 includes a parameter num_long_term_pics. As described above, this parameter specifies the number of long-term reference pictures specified in the slice header, which are included in the long-term reference picture set of the current picture.

At 718, syntax 700 includes a parameter lt_idx_sps[1]. As described above, this parameter specifies an index into the list of candidate long-term reference pictures specified in the active SPS for identification of the picture that is included in the long-term reference picture set of the current picture.

At 720, syntax 700 includes a parameter poc_lsb_lt[i]. As described above, this parameter specifies the value of the picture order count modulo MaxPicOrderCntLsb of the i-th long-term reference picture that is included in the long-term reference picture set of the current picture.

At 722, syntax 700 includes a parameter used_by_curr_pic_lt_flag[i]. As described above, this parameter specifies whether the i-th long term reference picture is used for reference by the current picture.

At 724, syntax 700 includes a parameter delta_poc_msb_present_flag[i]. As described above, this parameter specifies if delta_poc_msb_cycle_lt[i] is present.

At 726, syntax 700 includes a parameter delta_poc_msb_cycle_lt[i]. As described above, this parameter is used to determine the value of the most significant bits of the picture order count value of the i-th long-term reference picture that is included in the long-term reference picture set of the current picture.

At 728, syntax 700 includes a parameter sps_temporal_mvp_enable_flag. As described above, this parameter specifies if temporal motion vector predictors may be used in the CVS. The sps_temporal_mvp_enable_flag equal to 1 specifies that slice_temporal_mvp_enabled_flag is present in the slice headers of non-IDR pictures in the CVS. The sps_temporal_mvp_enable_flag equal to 0 specifies that slice_temporal_mvp_enabled_flag is not present in slice headers and that temporal motion vector predictors are not used in the CVS.

At 730, syntax 700 includes a parameter slice_temporal_mvp_enable_flag. As described above, this parameter specifies whether temporal motion vector predictors can be used for inter prediction.

From comparing FIGS. 6 and 7, the parameter slice_temporal_mvp_enable_flag may be moved or grouped under a single condition 701 of non-IDR picture. This slice_temporal_mvp_enable_flag parameter may be moved because it has the same logic conditions as the group it is being moved to (i.e., !IdrPicFlag ). Consequently, at 740, syntax 700 illustrates the moved parameters 728 and 730, shown with strikethrough.

In addition, at 732, syntax 700 includes a parameter slice_sao_luma_flag. This parameter specifies whether SAO is enabled for a luma component in a current slice. A slice_sao_luma_flag equal to 1 specifies that SAO is enabled for the luma component in the current slice; slice_sao_luma_flag equal to 0 specifies that SAO is disabled for the luma component in the current slice. When slice_sao_luma_flag is not present, it is inferred to be equal to 0.

At 734, syntax includes a parameter slice_sao_chroma_flag. This parameter specifies whether SAO is enabled for a chroma component in a current slice. A slice_sao_chroma_flag equal to 1 specifies that SAO is enabled for the chroma component in the current slice; slice_sao_chroma_flag equal to 0 specifies that SAO is disabled for the chroma component in the current slice. When slice_sao_chroma_flag is not present, it is inferred to be equal to 0.

As shown in FIG. 7, the parameters slice_sao_luma_flag 732 and slice_sao_chroma_flag 734 may be placed after the group of non-IDR picture parameters 701 because of above grouping or reordering.

While only a few examples have been shown, other syntax positions are contemplated. For example, under a specific logic condition, alternative relative positions of syntaxes are possible.

The above description of the disclosed embodiments is provided to enable any person skilled in the art to make or use the disclosure. Various modifications to these embodiments will be readily apparent to those skilled in the art, and the generic principles described herein can be applied to other embodiments without departing from the scope of the disclosure as defined by the appended claims. Thus, it is to be understood that the description and drawings presented herein represent exemplary embodiments of the disclosure and are therefore representative of the subject matter which is broadly contemplated by the present disclosure. It is further understood that the scope of the present disclosure fully encompasses other embodiments and that the scope of the present disclosure is accordingly limited by nothing other than the appended claims.

## Claims

1. A method comprising:
evaluating, by a computing device, a single conditional statement once to determine if a current picture is a non-instantaneous decoding refresh picture; and
based on the evaluating of the single conditional statement, when the current picture is a non-instantaneous decoding refresh picture, performing:
encoding or decoding, by the computing device, a first non-instantaneous decoding refresh parameter (708) indicating a picture order count modulo for the current picture;
encoding or decoding, by the computing device, a second non-instantaneous decoding refresh parameter (710) indicating how a short-term picture set of the current picture is created;
encoding or decoding, by the computing device, a third non-instantaneous decoding refresh parameter (712) indicating an index to a list of the short-term reference picture sets used for creation of a reference picture set of the current picture;
encoding or decoding, by the computing device, a fourth non-instantaneous decoding refresh parameter (714) indicating a number of candidate long-term reference pictures that are included in a long-term reference picture set of the current picture;
encoding or decoding, by the computing device, a fifth non-instantaneous decoding refresh parameter (716) indicating the number of long-term reference pictures that are included in the long-term reference picture set of the current picture;
one of:
encoding or decoding, by the computing device, a sixth non-instantaneous decoding refresh parameter (718) indicating an index into a list of candidate long-term reference pictures for identification of a picture that is included in the long-term reference picture set of the current picture; or
encoding or decoding, by the computing device, a seventh non-instantaneous decoding refresh parameter (720) indicating a value of a picture order count modulo of an i-th long-term reference picture that is included in the long-term reference picture set of the current picture; and
encoding or decoding, by the computing device, an eighth non-instantaneous decoding refresh parameter (722) indicating whether the i-th long term reference picture is used for reference by the current picture;
encoding or decoding, by the computing device, a ninth non-instantaneous decoding refresh parameter (724) indicating how to calculate a picture order of the long term reference picture set of the current picture;
encoding or decoding, by the computing device, a tenth non-instantaneous decoding refresh parameter (726) indicating the value of most significant bits of a picture order count value of the i-th long-term reference picture that is included in the long-term reference picture set of the current picture; and
encoding or decoding, by the computing device, an eleventh non-instantaneous decoding refresh parameter (730) indicating whether temporal motion vector predictors can be used for inter prediction;
wherein the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter are encoded or decoded consecutively without any other bits or syntax between the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter in or from an encoded bitstream associated with the sequence of video.

2. The method of claim 1 wherein an order in which the parameters exist in the encoded bitstream is the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter.

3. The method of claim 1 wherein the single conditional statement queries a status of a non-instantaneous decoding refresh flag, and wherein the non-instantaneous decoding refresh flag is set to a first value to enable a non-instantaneous decoding refresh picture mode or set to a second value to disable the non-instantaneous decoding refresh picture mode.

4. The method of claim 1 wherein the single conditional statement queries a status of a non-instantaneous decoding refresh flag, and wherein when the non-instantaneous decoding refresh flag indicates the non-instantaneous decoding refresh mode is disabled, not encoding or decoding the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter in or from the encoded bitstream associated with the sequence of video.

5. The method of claim 1 wherein an order in the encoded bitstream varies among the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter.

6. The method of claim 1 further comprising:
encoding or decoding, by the computing device, a first instantaneous decoding refresh parameter indicating if sample adaptive offset, SAO, is enabled for a luma component of the sequence of video;
wherein the first instantaneous decoding refresh parameter is encoded or decoded consecutively without any other bits or syntax between the eleventh non-instantaneous decoding refresh parameter and first instantaneous decoding refresh parameter.

7. The method of claim 6 further comprising:
encoding or decoding, by the computing device, a second instantaneous decoding refresh parameter indicating if sample adaptive offset, SAO, is enabled for a chroma component of the sequence of video;
wherein the second instantaneous decoding refresh parameter is encoded or decoded consecutively without any other bits or syntax between the first instantaneous decoding refresh parameter and second non-instantaneous decoding refresh parameter.

8. The method of claim 1 wherein all of the non-instantaneous decoding refresh parameters in a slice are included in the encoded bitstream after the single conditional statement including a single non-instantaneous decoding refresh flag and before a next slice.

9. The method of claim 1 wherein the non-instantaneous decoding refresh flag is located in a slice header.

10. An encoder comprising:
one or more computer processors; and
a non-transitory computer-readable storage medium comprising instructions that, when executed, control the one or more computer processors to be configured for:
evaluating a single conditional statement once to determine if a current picture is a non-instantaneous decoding refresh picture; and
based on the evaluating of the single conditional statement, when the current picture is a non-instantaneous decoding refresh picture, performing:
encoding a first non-instantaneous decoding refresh parameter (708) indicating a picture order count modulo for the current picture;
encoding a second non-instantaneous decoding refresh parameter (710) indicating how a short-term picture set of the current picture is created;
encoding a third non-instantaneous decoding refresh parameter (712) indicating an index to a list of the short-term reference picture sets used for creation of a reference picture set of the current picture;
encoding a fourth non-instantaneous decoding refresh parameter (714) indicating a number of candidate long-term reference pictures that are included in a long-term reference picture set of the current picture;
encoding a fifth non-instantaneous decoding refresh parameter (716) indicating the number of long-term reference pictures that are included in the long-term reference picture set of the current picture;
one of:
encoding a sixth non-instantaneous decoding refresh parameter (718) indicating an index into a list of candidate long-term reference pictures for identification of a picture that is included in the long-term reference picture set of the current picture; or
encoding a seventh non-instantaneous decoding refresh parameter (720) indicating a value of a picture order count modulo of an i-th long-term reference picture that is included in the long-term reference picture set of the current picture; and
encoding an eighth non-instantaneous decoding refresh parameter (722) indicating whether the i-th long term reference picture is used for reference by the current picture;
encoding a ninth non-instantaneous decoding refresh parameter (724) indicating how to calculate a picture order of the long term reference picture set of the current picture;
encoding a tenth non-instantaneous decoding refresh parameter (726) indicating the value of most significant bits of a picture order count value of the i-th long-term reference picture that is included in the long-term reference picture set of the current picture; and
encoding an eleventh non-instantaneous decoding refresh parameter (730) indicating whether temporal motion vector predictors can be used for inter prediction;
wherein the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter are encoded consecutively without any other bits or syntax between the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter in an encoded bitstream associated with the sequence of video.

11. A decoder comprising:
one or more computer processors; and
a non-transitory computer-readable storage medium comprising instructions that, when executed, control the one or more computer processors to be configured for:
evaluating a single conditional statement once to determine if a current picture is a non-instantaneous decoding refresh picture; and
based on the evaluating of the single conditional statement, when the current picture is a non-instantaneous decoding refresh picture, performing:
decoding a first non-instantaneous decoding refresh parameter (708) indicating a picture order count modulo for the current picture;
decoding a second non-instantaneous decoding refresh parameter (710) indicating how a short-term picture set of the current picture is created;
decoding a third non-instantaneous decoding refresh parameter (712) indicating an index to a list of the short-term reference picture sets used for creation of a reference picture set of the current picture;
decoding a fourth non-instantaneous decoding refresh parameter (714) indicating a number of candidate long-term reference pictures that are included in a long-term reference picture set of the current picture;
decoding a fifth non-instantaneous decoding refresh parameter (716) indicating the number of long-term reference pictures that are included in the long-term reference picture set of the current picture;
one of:
decoding a sixth non-instantaneous decoding refresh parameter (718) indicating an index into a list of candidate long-term reference pictures for identification of a picture that is included in the long-term reference picture set of the current picture; or
decoding a seventh non-instantaneous decoding refresh parameter (720) indicating a value of a picture order count modulo of an i-th long-term reference picture that is included in the long-term reference picture set of the current picture; and
decoding an eighth non-instantaneous decoding refresh parameter (722) indicating whether the i-th long term reference picture is used for reference by the current picture;
decoding a ninth non-instantaneous decoding refresh parameter (724) indicating how to calculate a picture order of the long term reference picture set of the current picture;
decoding a tenth non-instantaneous decoding refresh parameter (726) indicating the value of most significant bits of a picture order count value of the i-th long-term reference picture that is included in the long-term reference picture set of the current picture; and
decoding an eleventh non-instantaneous decoding refresh parameter (730) indicating whether temporal motion vector predictors can be used for inter prediction;
wherein the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter are decoded consecutively without any other bits or syntax between the first non-instantaneous decoding refresh parameter, the second non-instantaneous decoding refresh parameter, the third non-instantaneous decoding refresh parameter, the fourth non-instantaneous decoding refresh parameter, the fifth non-instantaneous decoding refresh parameter, one of the sixth non-instantaneous decoding refresh parameter or the seventh non-instantaneous decoding refresh parameter and the eighth non-instantaneous decoding refresh parameter, the ninth non-instantaneous decoding refresh parameter, the tenth non-instantaneous decoding refresh parameter, and the eleventh non-instantaneous decoding refresh parameter in an encoded bitstream associated with the sequence of video.

## Patentansprüche

1. Verfahren, umfassend:
Auswerten, durch eine Berechnungsvorrichtung, einer einzelnen konditionalen Anweisung einmal, um zu bestimmen, ob ein gegenwärtiges Bild ein nicht momentanes Decodierungsauffrischungsbild ist; und
basierend auf der Auswertung der einzelnen konditionalen Anweisung, wenn das gegenwärtige Bild ein nicht momentanes Decodierungsauffrischungsbild ist, Durchführen von:
Codieren oder Decodieren, durch die Berechnungsvorrichtung, eines ersten nicht momentanen Decodierungsauffrischungsparameters (708), der ein Bildreihenfolgezählung-Modulo für das gegenwärtige Bild angibt;
Codieren oder Decodieren, durch die Berechnungsvorrichtung, eines zweiten nicht momentanen Decodierungsauffrischungsparameters (710), der angibt, wie eine kurzfristige Bildmenge des gegenwärtigen Bilds erzeugt wird;
Codieren oder Decodieren, durch die Berechnungsvorrichtung, eines dritten nicht momentanen Decodierungsauffrischungsparameters (712), der einen Index zu einer Liste von kurzfristigen Referenzbildmengen angibt, die zur Erzeugung einer Referenzbildmenge des gegenwärtigen Bilds verwendet werden;
Codieren oder Decodieren, durch die Berechnungsvorrichtung, eines vierten nicht momentanen Decodierungsauffrischungsparameters (714), der eine Anzahl von langfristigen Kandidatenreferenzbildern angibt, die in einer langfristigen Referenzbildmenge des gegenwärtigen Bilds enthalten sind;
Codieren oder Decodieren, durch die Berechnungsvorrichtung, eines fünften nicht momentanen Decodierungsauffrischungsparameters (716), der die Anzahl von langfristigen Referenzbildern angibt, die in der langfristigen Referenzbildmenge des gegenwärtigen Bilds enthalten sind;
eines von:
Codieren oder Decodieren, durch die Berechnungsvorrichtung, eines sechsten nicht momentanen Decodierungsauffrischungsparameters (718), der einen Index in eine Liste von langfristigen Kandidatenreferenzbildern zur Identifikation eines Bilds angibt, das in der langfristigen Referenzbildmenge des gegenwärtigen Bilds enthalten ist; oder
Codieren oder Decodieren, durch die Berechnungsvorrichtung, eines siebten nicht momentanen Decodierungsauffrischungsparameters (720), der einen Wert eines Bildreihenfolgezählung-Modulos eines i-ten langfristigen Referenzbilds angibt, das in der langfristigen Referenzbildmenge des gegenwärtigen Bilds enthalten ist; und
Codieren oder Decodieren, durch die Berechnungsvorrichtung, eines achten nicht momentanen Decodierungsauffrischungsparameters (722), der angibt, ob das i-te langfristige Referenzbild zur Referenz von dem gegenwärtigen Bild verwendet wird;
Codieren oder Decodieren, durch die Berechnungsvorrichtung, eines neunten nicht momentanen Decodierungsauffrischungsparameters (724), der angibt, wie eine Bildreihenfolge der langfristigen Referenzbildmenge des gegenwärtigen Bilds zu berechnen ist;
Codieren oder Decodieren, durch die Berechnungsvorrichtung, eines zehnten nicht momentanen Decodierungsauffrischungsparameters (726), der den Wert der höchstwertigen Bits eines Bildreihenfolgezählungswerts des i-ten langfristigen Referenzbilds angibt, das in der langfristigen Referenzbildmenge des gegenwärtigen Bilds enthalten ist; und
Codieren oder Decodieren, durch die Berechnungsvorrichtung, eines elften nicht momentanen Decodierungsauffrischungsparameters (730), der angibt, ob temporale Bewegungsvektorprädiktoren für Zwischenprädiktion verwendet werden können;
wobei der erste nicht momentane Decodierungsauffrischungsparameter, der zweite nicht momentane Decodierungsauffrischungsparameter, der dritte nicht momentane Decodierungsauffrischungsparameter, der vierte nicht momentane Decodierungsauffrischungsparameter, der fünfte nicht momentane Decodierungsauffrischungsparameter, einer des sechsten nicht momentanen Decodierungsauffrischungsparameters oder des siebten nicht momentanen Decodierungsauffrischungsparameters und des achten nicht momentanen Decodierungsauffrischungsparameters, der neunte nicht momentane Decodierungsauffrischungsparameter, der zehnte nicht momentane Decodierungsauffrischungsparameter und der elfte nicht momentane Decodierungsauffrischungsparameter ohne irgendwelche anderen Bits oder Syntax zwischen dem ersten nicht momentanen Decodierungsauffrischungsparameter, dem zweiten nicht momentanen Decodierungsauffrischungsparameter, dem dritten nicht momentanen Decodierungsauffrischungsparameter, dem vierten nicht momentanen Decodierungsauffrischungsparameter, dem fünften nicht momentanen Decodierungsauffrischungsparameter, einem des sechsten nicht momentanen Decodierungsauffrischungsparameters oder des siebten nicht momentanen Decodierungsauffrischungsparameters und des achten nicht momentanen Decodierungsauffrischungsparameters, dem neunten nicht momentanen Decodierungsauffrischungsparameter, dem zehnten nicht momentanen Decodierungsauffrischungsparameter und dem elften nicht momentanen Decodierungsauffrischungsparameter in oder von einem mit der Videosequenz assoziierten codierten Bitstrom aufeinanderfolgend codiert oder decodiert werden.

2. Verfahren nach Anspruch 1, wobei eine Reihenfolge, in der die Parameter in dem codierten Bitstrom vorkommen, der erste nicht momentane Decodierungsauffrischungsparameter, der zweite nicht momentane Decodierungsauffrischungsparameter, der dritte nicht momentane Decodierungsauffrischungsparameter, der vierte nicht momentane Decodierungsauffrischungsparameter, der fünfte nicht momentane Decodierungsauffrischungsparameter, einer des sechsten nicht momentanen Decodierungsauffrischungsparameters oder des siebten nicht momentanen Decodierungsauffrischungsparameters und des achten nicht momentanen Decodierungsauffrischungsparameters, der neunte nicht momentane Decodierungsauffrischungsparameter, der zehnte nicht momentane Decodierungsauffrischungsparameter und der elfte nicht momentane Decodierungsauffrischungsparameter ist.

3. Verfahren nach Anspruch 1, wobei die einzelne konditionale Anweisung einen Status eines nicht momentanen Decodierungsauffrischungskennzeichens abfragt, und wobei das nicht momentane Decodierungsauffrischungskennzeichen auf einen ersten Wert gesetzt wird, um einen nicht momentanen Decodierungsauffrischungsbildmodus zu aktivieren, oder auf einen zweiten Wert gesetzt wird, um den nicht momentanen Decodierungsauffrischungsbildmodus zu deaktivieren.

4. Verfahren nach Anspruch 1, wobei die einzelne konditionale Anweisung einen Status eines nicht momentanen Decodierungsauffrischungskennzeichens abfragt, und wobei, wenn das nicht momentane Decodierungsauffrischungskennzeichen angibt, dass der nicht momentane Decodierungsauffrischungsmodus deaktiviert ist, das Verfahren den ersten nicht momentanen Decodierungsauffrischungsparameter, den zweiten nicht momentanen Decodierungsauffrischungsparameter, den dritten nicht momentanen Decodierungsauffrischungsparameter, den vierten nicht momentanen Decodierungsauffrischungsparameter, den fünften nicht momentanen Decodierungsauffrischungsparameter, einen des sechsten nicht momentanen Decodierungsauffrischungsparameters oder des siebten nicht momentanen Decodierungsauffrischungsparameters und des achten nicht momentanen Decodierungsauffrischungsparameters, den neunten nicht momentanen Decodierungsauffrischungsparameter, den zehnten nicht momentanen Decodierungsauffrischungsparameter und den elften nicht momentanen Decodierungsauffrischungsparameter in oder von dem mit der Videosequenz assoziierten codierten Bitstrom nicht codiert oder decodiert.

5. Verfahren nach Anspruch 1, wobei eine Reihenfolge in dem codierten Bitstrom unter dem ersten nicht momentanen Decodierungsauffrischungsparameter, dem zweiten nicht momentanen Decodierungsauffrischungsparameter, dem dritten nicht momentanen Decodierungsauffrischungsparameter, dem vierten nicht momentanen Decodierungsauffrischungsparameter, dem fünften nicht momentanen Decodierungsauffrischungsparameter, einem des sechsten nicht momentanen Decodierungsauffrischungsparameters oder des siebten nicht momentanen Decodierungsauffrischungsparameters und des achten nicht momentanen Decodierungsauffrischungsparameters, dem neunten nicht momentanen Decodierungsauffrischungsparameter, dem zehnten nicht momentanen Decodierungsauffrischungsparameter und dem elften nicht momentanen Decodierungsauffrischungsparameter variiert.

6. Verfahren nach Anspruch 1, ferner umfassend:
Codieren oder Decodieren, durch die Berechnungsvorrichtung, eines ersten momentanen Decodierungsauffrischungsparameters, der angibt, ob abtastadaptiver Versatz, SAO, für eine Luma-Komponente der Videosequenz aktiviert ist;
wobei der erste momentane Decodierungsauffrischungsparameter ohne irgendwelche anderen Bits oder Syntax zwischen dem elften nicht momentanen Decodierungsauffrischungsparameter und dem ersten momentanen Decodierungsauffrischungsparameter aufeinanderfolgend codiert oder decodiert wird.

7. Verfahren nach Anspruch 6, ferner umfassend:
Codieren oder Decodieren, durch die Berechnungsvorrichtung, eines zweiten momentanen Decodierungsauffrischungsparameters, der angibt, ob abtastadaptiver Versatz, SAO, für eine Chroma-Komponente der Videosequenz aktiviert ist;
wobei der zweite momentane Decodierungsauffrischungsparameter ohne irgendwelche anderen Bits oder Syntax zwischen dem ersten momentanen Decodierungsauffrischungsparameter und dem zweiten nicht momentanen Decodierungsauffrischungsparameter aufeinanderfolgend codiert oder decodiert wird.

8. Verfahren nach Anspruch 1, wobei sämtliche der nicht momentanen Decodierungsauffrischungsparameter in einer Scheibe in dem codierten Bitstrom nach der einzelnen konditionalen Anweisung, die ein einzelnes nicht momentanes Decodierungsauffrischungskennzeichen enthält, und vor einer nächsten Scheibe enthalten sind.

9. Verfahren nach Anspruch 1, wobei das nicht momentane Decodierungsauffrischungskennzeichen in einem Scheibenkopf angeordnet ist.

10. Codierer, umfassend:
einen oder mehrere Computerprozessoren; und
ein nicht vergängliches computerlesbares Speichermedium, umfassend Befehle, die, wenn sie ausgeführt werden, den einen oder die mehreren Computerprozessoren steuern, für Folgendes konfiguriert zu werden:
Auswerten einer einzelnen konditionalen Anweisung einmal, um zu bestimmen, ob ein gegenwärtiges Bild ein nicht momentanes Decodierungsauffrischungsbild ist; und
basierend auf der Auswertung der einzelnen konditionalen Anweisung, wenn das gegenwärtige Bild ein nicht momentanes Decodierungsauffrischungsbild ist, Durchführen von:
Codieren eines ersten nicht momentanen Decodierungsauffrischungsparameters (708), der ein Bildreihenfolgezählung-Modulo für das gegenwärtige Bild angibt;
Codieren eines zweiten nicht momentanen Decodierungsauffrischungsparameters (710), der angibt, wie eine kurzfristige Bildmenge des gegenwärtigen Bilds erzeugt wird;
Codieren eines dritten nicht momentanen Decodierungsauffrischungsparameters (712), der einen Index zu einer Liste der kurzfristigen Referenzbildmengen angibt, die zur Erzeugung einer Referenzbildmenge des gegenwärtigen Bilds verwendet werden;
Codieren eines vierten nicht momentanen Decodierungsauffrischungsparameters (714), der eine Anzahl von langfristigen Kandidatenreferenzbildern angibt, die in einer langfristigen Referenzbildmenge des gegenwärtigen Bilds enthalten sind;
Codieren eines fünften nicht momentanen Decodierungsauffrischungsparameters (716), der die Anzahl von langfristigen Referenzbildern angibt, die in der langfristigen Referenzbildmenge des gegenwärtigen Bilds enthalten sind;
eines von:
Codieren eines sechsten nicht momentanen Decodierungsauffrischungsparameters (718), der einen Index in eine Liste von langfristigen Kandidatenreferenzbildern zur Identifikation eines Bilds angibt, das in der langfristigen Referenzbildmenge des gegenwärtigen Bilds enthalten ist; oder
Codieren eines siebten nicht momentanen Decodierungsauffrischungsparameters (720), der einen Wert eines Bildreihenfolgezählung-Modulos eines i-ten langfristigen Referenzbilds angibt, das in der langfristigen Referenzbildmenge des gegenwärtigen Bilds enthalten ist; und
Codieren eines achten nicht momentanen Decodierungsauffrischungsparameters (722), der angibt, ob das i-te langfristige Referenzbild zur Referenz von dem gegenwärtigen Bild verwendet wird;
Codieren eines neunten nicht momentanen Decodierungsauffrischungsparameters (724), der angibt, wie eine Bildreihenfolge der langfristigen Referenzbildmenge des gegenwärtigen Bilds zu berechnen ist;
Codieren eines zehnten nicht momentanen Decodierungsauffrischungsparameters (726), der den Wert der höchstwertigen Bits eines Bildreihenfolgezählungswerts des i-ten langfristigen Referenzbilds angibt, das in der langfristigen Referenzbildmenge des gegenwärtigen Bilds enthalten ist; und
Codieren eines elften nicht momentanen Decodierungsauffrischungsparameters (730), der angibt, ob temporale Bewegungsvektorprädiktoren für Zwischenprädiktion verwendet werden können;
wobei der erste nicht momentane Decodierungsauffrischungsparameter, der zweite nicht momentane Decodierungsauffrischungsparameter, der dritte nicht momentane Decodierungsauffrischungsparameter, der vierte nicht momentane Decodierungsauffrischungsparameter, der fünfte nicht momentane Decodierungsauffrischungsparameter, einer des sechsten nicht momentanen Decodierungsauffrischungsparameters oder des siebten nicht momentanen Decodierungsauffrischungsparameters und des achten nicht momentanen Decodierungsauffrischungsparameters, der neunte nicht momentane Decodierungsauffrischungsparameter, der zehnte nicht momentane Decodierungsauffrischungsparameter und der elfte nicht momentane Decodierungsauffrischungsparameter ohne irgendwelche anderen Bits oder Syntax zwischen dem ersten nicht momentanen Decodierungsauffrischungsparameter, dem zweiten nicht momentanen Decodierungsauffrischungsparameter, dem dritten nicht momentanen Decodierungsauffrischungsparameter, dem vierten nicht momentanen Decodierungsauffrischungsparameter, dem fünften nicht momentanen Decodierungsauffrischungsparameter, einem des sechsten nicht momentanen Decodierungsauffrischungsparameters oder des siebten nicht momentanen Decodierungsauffrischungsparameters und des achten nicht momentanen Decodierungsauffrischungsparameters, dem neunten nicht momentanen Decodierungsauffrischungsparameter, dem zehnten nicht momentanen Decodierungsauffrischungsparameter und dem elften nicht momentanen Decodierungsauffrischungsparameter in einem mit der Videosequenz assoziierten codierten Bitstrom aufeinanderfolgend codiert werden.

11. Decodierer, umfassend:
einen oder mehrere Computerprozessoren; und
ein nicht vergängliches computerlesbares Speichermedium, umfassend Befehle, die, wenn sie ausgeführt werden, den einen oder die mehreren Computerprozessoren steuern, für Folgendes konfiguriert zu werden:
Auswerten einer einzelnen konditionalen Anweisung einmal, um zu bestimmen, ob ein gegenwärtiges Bild ein nicht momentanes Decodierungsauffrischungsbild ist; und
basierend auf der Auswertung der einzelnen konditionalen Anweisung, wenn das gegenwärtige Bild ein nicht momentanes Decodierungsauffrischungsbild ist, Durchführen von:
Decodieren eines ersten nicht momentanen Decodierungsauffrischungsparameters (708), der ein Bildreihenfolgezählung-Modulo für das gegenwärtige Bild angibt;
Decodieren eines zweiten nicht momentanen Decodierungsauffrischungsparameters (710), der angibt, wie eine kurzfristige Bildmenge des gegenwärtigen Bilds erzeugt wird;
Decodieren eines dritten nicht momentanen Decodierungsauffrischungsparameters (712), der einen Index zu einer Liste der kurzfristigen Referenzbildmengen angibt, die zur Erzeugung einer Referenzbildmenge des gegenwärtigen Bilds verwendet werden;
Decodieren eines vierten nicht momentanen Decodierungsauffrischungsparameters (714), der eine Anzahl von langfristigen Kandidatenreferenzbildern angibt, die in einer langfristigen Referenzbildmenge des gegenwärtigen Bilds enthalten sind;
Decodieren eines fünften nicht momentanen Decodierungsauffrischungsparameters (716), der die Anzahl von langfristigen Referenzbildern angibt, die in der langfristigen Referenzbildmenge des gegenwärtigen Bilds enthalten sind;
eines von:
Decodieren eines sechsten nicht momentanen Decodierungsauffrischungsparameters (718), der einen Index in eine Liste von langfristigen Kandidatenreferenzbildern zur Identifikation eines Bilds angibt, das in der langfristigen Referenzbildmenge des gegenwärtigen Bilds enthalten ist; oder
Decodieren eines siebten nicht momentanen Decodierungsauffrischungsparameters (720), der einen Wert eines Bildreihenfolgezählung-Modulos eines i-ten langfristigen Referenzbilds angibt, das in der langfristigen Referenzbildmenge des gegenwärtigen Bilds enthalten ist; und
Decodieren eines achten nicht momentanen Decodierungsauffrischungsparameters (722), der angibt, ob das i-te langfristige Referenzbild zur Referenz von dem gegenwärtigen Bild verwendet wird;
Decodieren eines neunten nicht momentanen Decodierungsauffrischungsparameters (724), der angibt, wie eine Bildreihenfolge der langfristigen Referenzbildmenge des gegenwärtigen Bilds zu berechnen ist;
Decodieren eines zehnten nicht momentanen Decodierungsauffrischungsparameters (726), der den Wert der höchstwertigen Bits eines Bildreihenfolgezählungswerts des i-ten langfristigen Referenzbilds angibt, das in der langfristigen Referenzbildmenge des gegenwärtigen Bilds enthalten ist; und
Decodieren eines elften nicht momentanen Decodierungsauffrischungsparameters (730), der angibt, ob temporale Bewegungsvektorprädiktoren für Zwischenprädiktion verwendet werden können;
wobei der erste nicht momentane Decodierungsauffrischungsparameter, der zweite nicht momentane Decodierungsauffrischungsparameter, der dritte nicht momentane Decodierungsauffrischungsparameter, der vierte nicht momentane Decodierungsauffrischungsparameter, der fünfte nicht momentane Decodierungsauffrischungsparameter, einer des sechsten nicht momentanen Decodierungsauffrischungsparameters oder des siebten nicht momentanen Decodierungsauffrischungsparameters und des achten nicht momentanen Decodierungsauffrischungsparameters, der neunte nicht momentane Decodierungsauffrischungsparameter, der zehnte nicht momentane Decodierungsauffrischungsparameter und der elfte nicht momentane Decodierungsauffrischungsparameter ohne irgendwelche anderen Bits oder Syntax zwischen dem ersten nicht momentanen Decodierungsauffrischungsparameter, dem zweiten nicht momentanen Decodierungsauffrischungsparameter, dem dritten nicht momentanen Decodierungsauffrischungsparameter, dem vierten nicht momentanen Decodierungsauffrischungsparameter, dem fünften nicht momentanen Decodierungsauffrischungsparameter, einem des sechsten nicht momentanen Decodierungsauffrischungsparameters oder des siebten nicht momentanen Decodierungsauffrischungsparameters und des achten nicht momentanen Decodierungsauffrischungsparameters, dem neunten nicht momentanen Decodierungsauffrischungsparameter, dem zehnten nicht momentanen Decodierungsauffrischungsparameter und dem elften nicht momentanen Decodierungsauffrischungsparameter in einem mit der Videosequenz assoziierten codierten Bitstrom aufeinanderfolgend decodiert werden.

## Revendications

1. Procédé comprenant les étapes consistant à :
évaluer, par le biais d'un dispositif informatique, une instruction conditionnelle unique une seule fois pour déterminer si une image actuelle est une image de rafraîchissement de décodage non instantané ; et
sur la base de l'étape d'évaluation de l'instruction conditionnelle unique, lorsque l'image actuelle est une image de rafraîchissement de décodage non instantané, mettre en œuvre les étapes consistant à :
coder ou décoder, par le biais du dispositif informatique, un premier paramètre de rafraîchissement de décodage non instantané (708) indiquant un opérateur modulo de comptage d'ordre d'image pour l'image actuelle ;
coder ou décoder, par le biais du dispositif informatique, un deuxième paramètre de rafraîchissement de décodage non instantané (710) indiquant comment un ensemble d'images éphémères de l'image actuelle est créé ;
coder ou décoder, par le biais du dispositif informatique, un troisième paramètre de rafraîchissement de décodage non instantané (712) indiquant un index d'une liste d'ensembles d'images de référence éphémères utilisés pour la création d'un ensemble d'images de référence de l'image actuelle ;
coder ou décoder, par le biais du dispositif informatique, un quatrième paramètre de rafraîchissement de décodage non instantané (714) indiquant un nombre d'images de référence durables candidates qui sont incluses dans un ensemble d'images de référence durables de l'image actuelle ;
coder ou décoder, par le biais du dispositif informatique, un cinquième paramètre de rafraîchissement de décodage non instantané (716) indiquant le nombre d'images de référence durables qui sont incluses dans l'ensemble d'images de référence durables de l'image actuelle ;
mettre en œuvre l'une des étapes consistant à :
coder ou décoder, par le biais du dispositif informatique, un sixième paramètre de rafraîchissement de décodage non instantané (718) indiquant un index dans une liste d'images de référence durables candidates pour l'identification d'une image qui est incluse dans l'ensemble d'images de référence durables de l'image actuelle ; ou
coder ou décoder, par le biais du dispositif informatique, un septième paramètre de rafraîchissement de décodage non instantané (720) indiquant une valeur d'un opérateur modulo de comptage d'ordre d'image d'une i-ème image de référence durable qui est incluse dans l'ensemble d'images de référence durables de l'image actuelle ; et
coder ou décoder, par le biais du dispositif informatique, un huitième paramètre de rafraîchissement de décodage non instantané (722) indiquant si l'i-ème image de référence durable est utilisée en tant que référence par l'image actuelle ;
coder ou décoder, par le biais du dispositif informatique, un neuvième paramètre de rafraîchissement de décodage non instantané (724) indiquant comment calculer un ordre d'image de l'ensemble d'images de référence durables de l'image actuelle ;
coder ou décoder, par le biais du dispositif informatique, un dixième paramètre de rafraîchissement de décodage non instantané (726) indiquant la valeur de bits les plus importants d'une valeur de comptage d'ordre d'image de l'i-ème image de référence durable qui est incluse dans l'ensemble d'images de référence durables de l'image actuelle ; et
coder ou décoder, par le biais du dispositif informatique, un onzième paramètre de rafraîchissement de décodage non instantané (730) indiquant si des prédicteurs de vecteurs de mouvement temporel peuvent être utilisés dans le cadre d'une inter-prédiction ;
dans lequel le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané, sont codés ou décodés consécutivement sans autres bits ou autre syntaxe entre le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané, dans un train de bits codé, ou à partir d'un train de bits codé, associé à la séquence vidéo.

2. Procédé selon la revendication 1, dans lequel un ordre, dans lequel les paramètres existent dans le train de bits codé, est : le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané.

3. Procédé selon la revendication 1, dans lequel l'instruction conditionnelle unique interroge un état d'un indicateur de rafraîchissement de décodage non instantané, et dans lequel l'indicateur de rafraîchissement de décodage non instantané est défini sur une première valeur pour activer un mode d'image de rafraîchissement de décodage non instantané, ou est défini sur une seconde valeur pour désactiver le mode d'image de rafraîchissement de décodage non instantané.

4. Procédé selon la revendication 1, dans lequel l'instruction conditionnelle unique interroge un état d'un indicateur de rafraîchissement de décodage non instantané, et dans lequel, lorsque l'indicateur de rafraîchissement de décodage non instantané indique que le mode de rafraîchissement de décodage non instantané est désactivé, le procédé ne code ou ne décode pas le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané, dans le train de bits codé, ou à partir de celui-ci, associé à la séquence vidéo.

5. Procédé selon la revendication 1, dans lequel un ordre dans le train de bits codé varie entre le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané.

6. Procédé selon la revendication 1, comprenant en outre l'étape consistant à :
coder ou décoder, par le biais du dispositif informatique, un premier paramètre de rafraîchissement de décodage instantané indiquant si un décalage adaptatif d'échantillon, SAO, est activé pour une composante de luminance de la séquence vidéo ;
dans lequel le premier paramètre de rafraîchissement de décodage instantané est codé ou décodé consécutivement sans autres bits ou autre syntaxe entre le onzième paramètre de rafraîchissement de décodage non instantané et le premier paramètre de rafraîchissement de décodage instantané.

7. Procédé selon la revendication 6, comprenant en outre l'étape consistant à :
coder ou décoder, par le biais du dispositif informatique, un second paramètre de rafraîchissement de décodage instantané indiquant si un décalage adaptatif d'échantillon, SAO, est activé pour une composante de chrominance de la séquence vidéo ;
dans lequel le second paramètre de rafraîchissement de décodage instantané est codé ou décodé consécutivement sans autres bits ou autre syntaxe entre le premier paramètre de rafraîchissement de décodage instantané et le deuxième paramètre de rafraîchissement de décodage non instantané.

8. Procédé selon la revendication 1, dans lequel tous les paramètres de rafraîchissement de décodage non instantané dans une tranche sont inclus dans le train de bits codé, après l'instruction conditionnelle unique incluant un unique indicateur de rafraîchissement de décodage non instantané, et avant une tranche successive.

9. Procédé selon la revendication 1, dans lequel l'indicateur de rafraîchissement de décodage non instantané est situé dans un en-tête de tranche.

10. Codeur comprenant :
un ou plusieurs processeurs informatiques ; et
un support de stockage non transitoire lisible par ordinateur comprenant des instructions qui, lorsqu'elles sont exécutées, commandent audit un ou auxdits plusieurs processeurs informatiques d'être configurés pour :
évaluer une instruction conditionnelle unique une seule fois pour déterminer si une image actuelle est une image de rafraîchissement de décodage non instantané ; et
sur la base de l'étape d'évaluation de l'instruction conditionnelle unique, lorsque l'image actuelle est une image de rafraîchissement de décodage non instantané, mettre en œuvre les étapes consistant à :
coder un premier paramètre de rafraîchissement de décodage non instantané (708) indiquant un opérateur modulo de comptage d'ordre d'image pour l'image actuelle ;
coder un deuxième paramètre de rafraîchissement de décodage non instantané (710) indiquant comment un ensemble d'images éphémères de l'image actuelle est créé ;
coder un troisième paramètre de rafraîchissement de décodage non instantané (712) indiquant un index d'une liste des ensembles d'images de référence éphémères utilisés pour la création d'un ensemble d'images de référence de l'image actuelle ;
coder un quatrième paramètre de rafraîchissement de décodage non instantané (714) indiquant un nombre d'images de référence durables candidates qui sont incluses dans un ensemble d'images de référence durables de l'image actuelle ;
coder un cinquième paramètre de rafraîchissement de décodage non instantané (716) indiquant le nombre d'images de référence durables qui sont incluses dans l'ensemble d'images de référence durables de l'image actuelle ;
mettre en œuvre l'une des étapes consistant à :
coder un sixième paramètre de rafraîchissement de décodage non instantané (718) indiquant un index dans une liste d'images de référence durables candidates pour l'identification d'une image qui est incluse dans l'ensemble d'images de référence durables de l'image actuelle ; ou
coder un septième paramètre de rafraîchissement de décodage non instantané (720) indiquant une valeur d'un opérateur modulo de comptage d'ordre d'image d'une i-ème image de référence durable qui est incluse dans l'ensemble d'images de référence durables de l'image actuelle ; et
coder un huitième paramètre de rafraîchissement de décodage non instantané (722) indiquant si l'i-ème image de référence durable est utilisée en tant que référence par l'image actuelle ;
coder un neuvième paramètre de rafraîchissement de décodage non instantané (724) indiquant comment calculer un ordre d'image de l'ensemble d'images de référence durables de l'image actuelle ;
coder un dixième paramètre de rafraîchissement de décodage non instantané (726) indiquant la valeur de bits les plus importants d'une valeur de comptage d'ordre d'image de l'i-ème image de référence durable qui est incluse dans l'ensemble d'images de référence durables de l'image actuelle ; et
coder un onzième paramètre de rafraîchissement de décodage non instantané (730) indiquant si des prédicteurs de vecteurs de mouvement temporels peuvent être utilisés dans le cadre d'une inter-prédiction ;
dans lequel le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané, sont codés consécutivement sans autres bits ou autre syntaxe entre le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané, dans un train de bits codé associé à la séquence vidéo.

11. Décodeur comprenant :
un ou plusieurs processeurs informatiques ; et
un support de stockage non transitoire lisible par ordinateur comprenant des instructions qui, lorsqu'elles sont exécutées, commandent audit un ou auxdits plusieurs processeurs informatiques d'être configurés pour :
évaluer une instruction conditionnelle unique une seule fois pour déterminer si une image actuelle est une image de rafraîchissement de décodage non instantané ; et
sur la base de l'étape d'évaluation de l'instruction conditionnelle unique, lorsque l'image actuelle est une image de rafraîchissement de décodage non instantané, mettre en œuvre les étapes consistant à :
décoder un premier paramètre de rafraîchissement de décodage non instantané (708) indiquant un opérateur modulo de comptage d'ordre d'image pour l'image actuelle ;
décoder un deuxième paramètre de rafraîchissement de décodage non instantané (710) indiquant comment un ensemble d'images éphémères de l'image actuelle est créé ;
décoder un troisième paramètre de rafraîchissement de décodage non instantané (712) indiquant un index d'une liste d'ensembles d'images de référence éphémères utilisés pour la création d'un ensemble d'images de référence de l'image actuelle ;
décoder un quatrième paramètre de rafraîchissement de décodage non instantané (714) indiquant un nombre d'images de référence durables candidates qui sont incluses dans un ensemble d'images de référence durables de l'image actuelle ;
décoder un cinquième paramètre de rafraîchissement de décodage non instantané (716) indiquant le nombre d'images de référence durables qui sont incluses dans l'ensemble d'images de référence durables de l'image actuelle ;
mettre en œuvre l'une des étapes consistant à :
décoder un sixième paramètre de rafraîchissement de décodage non instantané (718) indiquant un index dans une liste d'images de référence durables candidates pour l'identification d'une image qui est incluse dans l'ensemble d'images de référence durables de l'image actuelle ; ou
décoder un septième paramètre de rafraîchissement de décodage non instantané (720) indiquant une valeur d'un opérateur modulo de comptage d'ordre d'image d'une i-ème image de référence durable qui est incluse dans l'ensemble d'images de référence durables de l'image actuelle ; et
décoder un huitième paramètre de rafraîchissement de décodage non instantané (722) indiquant si l'i-ème image de référence durable est utilisée en tant que référence par l'image actuelle ;
décoder un neuvième paramètre de rafraîchissement de décodage non instantané (724) indiquant comment calculer un ordre d'image de l'ensemble d'images de référence durables de l'image actuelle ;
décoder un dixième paramètre de rafraîchissement de décodage non instantané (726) indiquant la valeur de bits les plus importants d'une valeur de comptage d'ordre d'image de l'i-ème image de référence durable qui est incluse dans l'ensemble d'images de référence durables de l'image actuelle ; et
décoder un onzième paramètre de rafraîchissement de décodage non instantané (730) indiquant si des prédicteurs de vecteurs de mouvement temporels peuvent être utilisés dans le cadre d'une inter-prédiction ;
dans lequel le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané, sont décodés consécutivement sans autres bits ou autre syntaxe entre le premier paramètre de rafraîchissement de décodage non instantané, le deuxième paramètre de rafraîchissement de décodage non instantané, le troisième paramètre de rafraîchissement de décodage non instantané, le quatrième paramètre de rafraîchissement de décodage non instantané, le cinquième paramètre de rafraîchissement de décodage non instantané, l'un parmi le sixième paramètre de rafraîchissement de décodage non instantané ou le septième paramètre de rafraîchissement de décodage non instantané, et le huitième paramètre de rafraîchissement de décodage non instantané, le neuvième paramètre de rafraîchissement de décodage non instantané, le dixième paramètre de rafraîchissement de décodage non instantané et le onzième paramètre de rafraîchissement de décodage non instantané, dans un train de bits codé associé à la séquence vidéo.
